# EUROPEAN PATENT APPLICATION

(11) **EP 4 223 553 A1**
(43) Date of publication of application: **09.08.2023**
(21) Application number: 21875432.3
(22) Date of filing: 24.09.2021
(51) Int. Cl.: B60C 1/00, C08L 7/00, C08L 9/00, C08L 15/00, C08K 3/04, C08K 3/36

(54) **RUBBER COMPOSITION FOR HEAVY-LOAD TIRE**

(30) Priority: 29.09.2020 JP 2020163780
(71) Applicant: ZS Elastomers Co., Ltd., Tokyo 100-8246 (JP); Zeon Corporation, Tokyo 100-8246 (JP)
(72) Inventor: KUWABARA, Shingo, Tokyo 100-8246 (JP); KARATO, Takeshi, Tokyo 100-8246 (JP)
(74) Representative: Maiwald GmbH
(86) International application number: PCT/JP2021/035130
(87) International publication number: WO 2022/071130

(57) **Abstract**

Provided is a rubber composition for heavy-load tires, the rubber composition comprising an aromatic vinyl-conjugated diene copolymer having a glass transition temperature (Tg) of -50°C or lower and having a functional group interactive with silica; and silica.

## Description

### TECHNICAL FIELD

The present invention pertains to a rubber composition for heavy-load tires which can provide a cross-linked rubber having remarkably reduced heat buildup and excellent wear resistance and having high chipping resistance, and can be suitably used in heavy-load tire applications.

### BACKGROUND ART

An important feature for heavy-load tires for use as truck and bus tires and the like is excellent wear resistance that enables the tires to have a longer lifespan. On the other hand, recent environmental and resource issues have created a growing demand for low heat buildup (high fuel efficiency). In order to achieve a heavy-load tire imparted with low heat buildup, addition of silica to a composition for heavy-load tires has been studied. Unfortunately, this ends up with reduced wear resistance.

For example, Patent Document 1 proposes a rubber composition for heavy-load tires, the rubber composition containing 35 to 60 parts by weight of carbon black and 0 to 25 parts by weight of silica relative to 100 parts by weight of rubber components including 50 parts by weight or more of a diene rubber prepared using a lithium amide polymerization initiator, the carbon black having a dibutyl phthalate (DBP) oil absorption-to-24M4DBP oil absorption ratio (DBP oil absorption/24M4DBP oil absorption) of 1.20 or more, and a DBP oil absorption-to-nitrogen adsorption specific area (N₂SA) ratio (DBP oil absorption/N₂SA) of 0.8 or more.

However, tires produced using the rubber composition for heavy-load tires disclosed in Patent Document 1 have insufficiently low heat buildup and insufficient wear resistance although their chipping resistance is satisfactory. For this reason, there is a demand for further reduced heat buildup and further improved wear resistance as well as sufficient chipping resistance from the viewpoint of suitability for heavy-load tire applications.

### RELATED ART DOCUMENTS

### PATENT DOCUMENTS

Patent document 1: JP 2000-239444 A

### SUMMARY OF THE INVENTION

### PROBLEM TO BE SOLVED BY THE INVENTION

An objective of the present invention is to provide a rubber composition for heavy-load tires which can provide a cross-linked rubber having remarkably reduced heat buildup and excellent wear resistance and having high chipping resistance.

### MEANS FOR SOLVING THE PROBLEMS

As a result of intensive studies to achieve the above objective, the present inventors have found that the above objective can be achieved by a rubber composition prepared by combining an aromatic vinyl-conjugated diene copolymer and silica, the aromatic vinyl-conjugated diene copolymer having a glass transition temperature (Tg) of -50°C or lower and having a functional group interactive with silica. This finding has led to the completion of the present invention.

Specifically, the present invention provides a rubber composition for heavy-load tires, the rubber composition comprising an aromatic vinyl-conjugated diene copolymer having a glass transition temperature (Tg) of -50°C or lower and having a functional group interactive with silica; and silica.

In the rubber composition for heavy-load tires according to the present invention, the glass transition temperature (Tg) of the aromatic vinyl-conjugated diene copolymer is preferably -70°C or lower.

In the rubber composition for heavy-load tires according to the present invention, the silica preferably has a nitrogen absorption specific surface area determined by the BET method of 30 to 500 m²/g.

The amount of the silica present in the rubber composition for heavy-load tires according to the present invention is preferably 10 to 200 parts by weight relative to 100 parts by weight of a rubber component including the aromatic vinyl-conjugated diene copolymer.

Preferably, the rubber composition for heavy-load tires according to the present invention further comprises carbon black.

In the rubber composition for heavy-load tires according to the present invention, the carbon black preferably has a nitrogen absorption specific surface area determined by the BET method of 30 m²/g or more.

The amount of the carbon black present in the rubber composition for heavy-load tires according to the present invention is preferably 10 to 200 parts by weight relative to 100 parts by weight of a rubber component including the aromatic vinyl-conjugated diene copolymer.

The amount of the aromatic vinyl-conjugated diene copolymer present in the rubber composition for heavy-load tires according to the present invention is preferably 10 to 80% by weight in 100% by weight of the total rubber component.

The rubber composition for heavy-load tires according to the present invention preferably further comprises a natural rubber, the natural rubber being present in an amount of 10 to 80% by weight in 100% by weight of the total rubber component.

The rubber composition for heavy-load tires according to the present invention preferably further comprises a polybutadiene rubber, the polybutadiene rubber being present in an amount of 10 to 80% by weight in 100% by weight of the total rubber component.

In the rubber composition for heavy-load tires according to the present invention, the functional group interactive with silica of the aromatic vinyl-conjugated diene copolymer is preferably a group having a structure represented by Si-OR^{a}, wherein R^{a} is a hydrogen atom or a hydrocarbyl group optionally having a substituent.

The present invention also provides a cross-linked rubber obtained by cross-linking the rubber composition for heavy-load tires according to the present invention.

The present invention further provides a heavy-load tire comprising the cross-linked rubber according to the present invention.

### EFFECTS OF THE INVENTION

The present invention provides a rubber composition for heavy-load tires which can provide a cross-linked rubber having remarkably reduced heat buildup and excellent wear resistance and having high chipping resistance, a cross-linked rubber which is obtained using such a rubber composition for heavy-load tires, has remarkably reduced heat buildup and excellent wear resistance, and has high chipping resistance, and a heavy-load tire.

### DESCRIPTION OF EMBODIMENTS

A rubber composition for heavy-load tires according to the present invention comprises an aromatic vinyl-conjugated diene copolymer having a glass transition temperature (Tg) of -50°C or lower and having a functional group interactive with silica; and silica.

### <Aromatic vinyl-conjugated diene copolymer>

The aromatic vinyl-conjugated diene copolymer used in the present invention is a polymer having a glass transition temperature (Tg) of - 50°C or lower and having a functional group interactive with silica.

The aromatic vinyl-conjugated diene copolymer having a glass transition temperature (Tg) of -50°C or lower and having a functional group interactive with silica (hereinafter, conveniently referred to as "aromatic vinyl-conjugated diene copolymer") used in the present invention contains a conjugated diene monomer unit and an aromatic vinyl monomer unit.

Examples of conjugated diene compounds for forming the conjugated diene monomer unit include, but are not particularly limited to, 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene, and the like. Among these, preferred are 1,3-butadiene and isoprene, and more preferred is 1,3-butadiene. These conjugated diene compounds may be used alone or in combination of two or more.

The content of the conjugated diene monomer unit is preferably 50 to 99% by weight, more preferably 70 to 99% by weight, still more preferably 80 to 99% by weight, particularly preferably 83 to 97% by weight of the total monomer units constituting the aromatic vinyl-conjugated diene copolymer used in the present invention. When the content of the conjugated diene monomer unit is controlled within the above ranges, a cross-linked rubber having further reduced heat buildup and further improved wear resistance can be obtained.

Examples of aromatic vinyl compounds for forming the aromatic vinyl monomer unit include, but are not particularly limited to, styrene, methylstyrene, ethylstyrene, t-butylstyrene, α-methylstyrene, α-methyl-p-methylstyrene, chlorostyrene, bromostyrene, methoxystyrene, dimethylaminomethylstyrene, dimethylaminoethylstyrene, diethylaminomethylstyrene, diethylaminoethylstyrene, cyanoethylstyrene, vinylnaphthalene, and the like. Among these, preferred is styrene. These aromatic vinyl compounds may be used alone or in combination of two or more.

The content of the aromatic vinyl monomer unit is preferably 1 to 50% by weight, more preferably 1 to 30% by weight, still more preferably 1 to 20% by weight, still further more preferably 3 to 17% by weight of the total monomer units constituting the aromatic vinyl-conjugated diene copolymer used in the present invention. When the content of the aromatic-vinyl monomer unit is controlled within the above ranges, a cross-linked rubber having further reduced heat buildup and further improved wear resistance can be obtained.

The aromatic vinyl-conjugated diene copolymer used in the present invention may contain an additional monomer unit other than the conjugated diene monomer unit and the aromatic-vinyl monomer unit. Examples of additional monomers for forming such additional monomer units include straight-chain olefin compounds such as ethylene, propylene, and 1-butene; cyclic olefin compounds such as cyclopentene and 2-norbornene; unconjugated diene compounds such as 1,5-hexadiene, 1,6-heptadiene, 1,7-octadiene, dicyclopentadiene, and 5-ethylidene-2-norbornene; and the like. The content of the additional monomer unit is preferably 10% by weight or less, more preferably 5% by weight or less of the total monomer units constituting the aromatic vinyl-conjugated diene copolymer used in the present invention.

The aromatic vinyl-conjugated diene copolymer used in the present invention has a glass transition temperature (Tg) of -50°C or lower. Its glass transition temperature (Tg) is preferably -70°C or lower, more preferably -80°C or lower. The lower limit of the glass transition temperature (Tg) is not particularly limited, but is preferably -100°C or higher. In the present invention, an aromatic vinyl-conjugated diene copolymer having a glass transition temperature (Tg) of -50°C or lower and having a functional group interactive with silica (described later) is used, and silica is used in combination therewith. This enables production of a cross-linked rubber having remarkably reduced heat buildup and excellent wear resistance and having high chipping resistance. Examples of methods for controlling the glass transition temperature (Tg) of the aromatic vinyl-conjugated diene copolymer within the above ranges include, but are not particularly limited to, controlling the content of the aromatic vinyl monomer unit in the total monomer units constituting the aromatic vinyl-conjugated diene copolymer; controlling the vinyl bond content of the conjugated diene monomer unit; and the like.

From the viewpoint of controlling the glass transition temperature (Tg) of the aromatic vinyl-conjugated diene copolymer used in the present invention within the above ranges, the vinyl bond content of the conjugated diene monomer unit in the aromatic vinyl-conjugated diene copolymer is preferably 50% by weight or less, more preferably 35% by weight or less, still more preferably 25% by weight or less, still further more preferably 20% by weight or less, particularly preferably 17% by weight or less. The lower limit of the vinyl bond content is not particularly limited, but is preferably 5% by weight or more, more preferably 10% by weight or more, still more preferably 12% by weight or more.

The aromatic vinyl-conjugated diene copolymer used in the present invention has a functional group interactive with silica in the polymer structure. The functional group interactive with silica refers to a functional group capable of forming a covalent bond with the surface of silica, or creating an intermolecular force (e.g., ion-dipole interaction, dipole-dipole interaction, hydrogen bond, or van der Waals force) weaker than a covalent bond. Examples of such functional groups interactive with silica include, but are not particularly limited to, nitrogen atom-containing functional groups, silicon atom-containing functional groups, oxygen atom-containing functional groups, and the like. Among these, preferred are silicon atom-containing functional groups, and preferred are groups having a structure represented by Si-OR^{a} (wherein R^{a} is a hydrogen atom or a hydrocarbyl group optionally having a substituent) because they are more interactive with silica.

Examples of hydrocarbyl groups which can form R^{a} include alkyl groups, cycloalkyl groups, alkenyl groups, aryl groups, aralkyl groups, and the like. Preferred are alkyl groups having 1 to 6 carbon atoms. Examples of alkyl groups having 1 to 6 carbon atoms include a methyl group, an ethyl group, an n-propyl group, an isopropyl group, a butyl group, a pentyl group, a hexyl group, and the like. Among these, more preferred are a methyl group and an ethyl group, and particularly preferred is a methyl group. Examples of hydrocarbyl groups having a substituent include hydrocarbyl groups having a hydrocarbyloxy group as a substituent, and the like, and examples of hydrocarbyl groups having a hydrocarbyloxy group as a substituent include alkoxyalkyl groups such as a methoxymethyl group, an ethoxymethyl group, and a methoxyethyl group; and aryloxyalkyl groups such as a phenoxymethyl groups; and the like.

Examples of methods for introducing the functional group interactive with silica to the aromatic vinyl-conjugated diene copolymer used in the present invention include, but are not particularly limited to, a method for producing the aromatic vinyl-conjugated diene copolymer in which monomers including the conjugated diene compound and the aromatic vinyl compound are polymerized to yield an aromatic vinyl-conjugated diene copolymer chain having an active end, and the aromatic vinyl-conjugated diene copolymer chain having an active end is reacted with a modifier having the functional group interactive with silica, and the like.

### <Method for producing aromatic vinyl-conjugated diene copolymer>

Although the aromatic vinyl-conjugated diene copolymer used in the present invention may be produced by any method without limitation, a suitable one is a method for producing an aromatic vinyl-conjugated diene copolymer, the method comprising:
a polymerization step of polymerizing monomers including a conjugated diene compound and an aromatic vinyl compound in an inert solvent in the presence of a polymerization initiator to yield an aromatic vinyl-conjugated diene copolymer chain having an active end; and
a modification step of reacting the aromatic vinyl-conjugated diene copolymer chain having an active end obtained in the polymerization step with a modifier having a functional group interactive with silica.

### <Polymerization step>

The conjugated diene compound and the aromatic vinyl compound included in the monomers used in the polymerization step may be any of the monomers listed above, and the amounts thereof used can be selected according to the monomer proportions of a desired aromatic vinyl-conjugated diene copolymer. In the case where an aromatic vinyl-conjugated diene copolymer containing an additional monomer unit other than the conjugated diene monomer unit and the aromatic vinyl monomer unit is prepared, the monomers used in the polymerization step can include any of the additional monomers for forming additional monomer units described above.

The inert solvent used in polymerization may be one generally used in solution polymerization, and is not particularly limited as long as it does not inhibit the polymerization reaction. Specific examples of such insert solvents include chain aliphatic hydrocarbons such as butane, pentane, hexane, and heptane; alicyclic hydrocarbons such as cyclopentane and cyclohexane; aromatic hydrocarbons such as benzene, toluene, xylene, and ethylbenzene; ether compounds such as tetrahydrofuran and diethyl ether; and the like. These inert solvents may be used alone or in combination of two or more. Although not particularly limited, the amount of the inert solvent used is selected to provide a monomer concentration of, for example, 1 to 50% by weight, preferably 10 to 40% by weight.

The polymerization initiator used in polymerization is not particularly limited as long as monomers including the conjugated diene compound and the aromatic vinyl compound are polymerized to yield an aromatic vinyl-conjugated diene copolymer chain having an active end. Specific examples thereof include organic alkali metal compounds, organic alkaline earth metal compounds, and polymerization initiators having a lanthanide-series metal compound or the like as a primary catalyst. Examples of organic alkali metal compounds include organic monolithium compounds such as n-butyllithium, sec-butyllithium, t-butyllithium, hexyllithium, phenyllithium, and stilbenelithium; organic polyvalent lithium compounds such as dilithiomethane, 1,4-dilithiobutane, 1,4-dilithio-2-ethylcyclohexane, 1,3,5-trilithiobenzene, and 1,3,5-tris(lithiomethyl)benzene; organic sodium compounds such as sodium naphthalene; organic potassium compounds such as potassium naphthalene; and the like. Examples of organic alkaline earth metal compounds include di-n-butylmagnesium, di-n-hexylmagnesium, diethoxycalcium, calcium distearate, di-t-butoxystrontium, diethoxybarium, diisopropoxybarium, diethylmercaptobarium, di-t-butoxybarium, diphenoxybarium, diethylaminobarium, barium distearate, diketylbarium, and the like. Examples of polymerization initiators containing a lanthanide-series metal compound as a primary catalyst include polymerization initiators containing a lanthanide-series metal salt of a lanthanide-series metal, such as lanthanum, cerium, praseodymium, neodymium, samarium, or gadolinium, and a carboxylic acid, a phosphorus-containing organic acid, or the like as a primary catalyst, and a promoter such as an alkylaluminum compound, an organoaluminum hydride compound, or an organoaluminum halide compound. Among these polymerization initiators, organic monolithium compounds and organic poly-lithium compounds are preferably used, organic monolithium compounds are more preferably used, and n-butyllithium is particularly preferably used.

The organic alkali metal compounds may be reacted in advance with a secondary amine compound, such as dibutylamine, dihexylamine, dibenzylamine, pyrrolidine, piperidine, hexamethyleneimine, or heptamethyleneimine, and used as organic alkali metal amide compounds. When an organic alkali metal amide compound is used as a polymerization initiator, a cross-linked rubber having further reduced heat buildup and further improved wear resistance can be obtained. These polymerization initiators may be used alone or in combination of two or more.

The amount of the polymerization initiator used can be selected according to the molecular weight of a desired aromatic vinyl-conjugated diene copolymer chain, and is typically in the range of 1 to 50 mmol, preferably 1.5 to 20 mmol, more preferably 2 to 15 mmol per 1000 g of monomers.

The polymerization temperature is in the range of typically - 80 to +150°C, preferably 0 to 100°C, more preferably from 30 to 90°C. Although the polymerization mode may be any mode such as batch or continuous, a batch mode is preferable in order to ensure easy control of the randomness of conjugated diene monomer units and aromatic vinyl monomer units bonded.

In the present invention, the proportion of aromatic vinyl compound blocks in the aromatic vinyl-conjugated diene copolymer is preferably 10.0% or less, more preferably 5.0% or less, still more preferably 3.0% or less, particularly preferably 2.0% or less. The proportion of aromatic vinyl compound blocks is determined by ¹H-NMR using deuterated chloroform as a solvent. A ¹H-NMR spectrum is obtained, where in the range of 6.1 to 7.7 ppm, peaks are regarded as derived from the aromatic vinyl compound and in the range of 6.1 to 6.88 ppm therein, peaks are regarded as derived from aromatic vinyl compound blocks. The ratio of the peak area of aromatic vinyl compound blocks to the peak area of the aromatic vinyl compound is determined, and the value is multiplied by 2.5 and converted to a percentage as a proportion of aromatic vinyl compound blocks. In the case where the aromatic vinyl compound is styrene, it is preferable that the proportion of styrene blocks fall within the above ranges. When the proportion of aromatic vinyl compound blocks is controlled within the above ranges, a cross-linked rubber having a greater balance of low heat buildup and wear resistance can be obtained. The proportion of aromatic vinyl compound blocks can be controlled in the process of polymerizing the monomers including the conjugated diene compound and the aromatic vinyl compound by a method such as selecting the proportional amounts of the monomers used at the start of polymerization, selecting factors in additional addition of the monomers such as the proportional amount of the aromatic vinyl compound in the monomers additionally added and the timing of additional addition, adjusting the amount of the inert solvent relative to the amount of the aromatic vinyl compound used, selecting the type, the amount, or the like of a polar compound, or selecting the polymerization temperature, or a combination of any of these methods.

In the polymerization step, the polymerization of the monomers including the conjugated diene compound and the aromatic vinyl compound is preferably performed in the presence of a polar compound. Specifically, a polar compound is used in an amount of preferably 0.01 to 1.2 mol, more preferably 0.1 to 1.1 mol, still more preferably 0.1 to 1.0 mol per mol of the polymerization initiator. Such use of a polar compound in the polymerization enables suitable control of the vinyl bond content of conjugated diene monomer units in the aromatic vinyl-conjugated diene copolymer chain formed in the polymerization step within the above ranges.

The polymerization in the presence of a polar compound may be performed by any method without limitation, and examples thereof include methods such as performing polymerization in an inert solvent for polymerization containing the polar compound. Specific examples of the polar compound include ether compounds such as dibutylether, tetrahydrofuran, and 2,2-di(tetrahydrofuryl)propane; tertiary amines such as tetramethylethylenediamine; alkali metal alkoxides; phosphine compounds; and the like. Among these, preferred are ether compounds and tertiary amines, more preferred are tertiary amines, and particularly preferred is tetramethylethylenediamine. These polar compounds may be used alone or in combination of two or more.

Although the weight average molecular weight (Mw) of the aromatic vinyl-conjugated diene copolymer chain having an active end formed in the polymerization step is not particularly limited, the polystyrene-equivalent weight average molecular weight thereof determined by gel permeation chromatography is preferably 150,000,to 3,000,000, more preferably 170,000 to 2,000,000, still more preferably 200,000 to 1,500,000, particularly preferably 350,000 to 650,000, most preferably 380,000 to 520,000. When the weight average molecular weight (Mw) of the aromatic vinyl-conjugated diene copolymer chain having an active end is controlled within the above ranges, a cross-linked rubber having a greater balance of low heat buildup and wear resistance can be obtained.

Although the molecular weight distribution, which is represented by the ratio (Mw/Mn) of the weight average molecular weight (Mw) to the number average molecular weight (Mn), of the aromatic vinyl-conjugated diene copolymer chain having an active end formed in the polymerization step is also not particularly limited, it is preferably 1.1 to 3.5, more preferably 1.2 to 3.0, still more preferably 1.3 to 2.5. Control of the molecular weight distribution (Mw/Mn) of the aromatic vinyl-conjugated diene copolymer chain having an active end within the above ranges leads to easy production of the aromatic vinyl-conjugated diene copolymer.

In the present invention, in order to produce a cross-linked rubber having further reduced heat buildup and further improved wear resistance, the polymerization step may be as follows.

Specifically, the polymerization step preferably includes the steps of polymerizing monomers including isoprene or isoprene and the aromatic vinyl compound using a polymerization initiator in an inert solvent to provide a polymer block (A) having an active end containing 80 to 100% by weight of isoprene monomer units and 0 to 20% by weight of aromatic vinyl monomer units; and
combining the polymer block (A) having an active end obtained above with monomers including 1,3-butadiene and the aromatic vinyl compound and continuing polymerization to form a polymer block (B) containing 1,3-butadiene monomer units and aromatic vinyl monomer units as one molecule with the polymer block (A), thereby providing an aromatic vinyl-conjugated diene copolymer chain having an active end.

When such steps are employed, the polymerization step results in aromatic vinyl-conjugated diene copolymer chains having an active end including chains in which a polymer block (A) containing 80 to 100% by weight of isoprene monomer units and 0 to 20% by weight of aromatic vinyl monomer units and a polymer block (B) containing 1,3-butadiene monomer units and aromatic vinyl monomer units are formed as one molecule.

The following description illustrates such an embodiment.

### [Polymer block (A)]

According to one embodiment of the present invention, it is sufficient that the polymer block (A) in the aromatic vinyl-conjugated diene copolymer chain contains 80 to 100% by weight of isoprene monomer units and 0 to 20% by weight of aromatic vinyl monomer units, the polymer block (A) preferably contains 85 to 97% by weight of isoprene monomer units and 3 to 15% by weight of aromatic vinyl monomer units, more preferably 89 to 95% by weight of isoprene monomer units and 5 to 11% by weight of aromatic vinyl monomer units. Control of the contents of isoprene monomer units and aromatic vinyl monomer units within the above ranges results in further enhanced compatibility between the aromatic vinyl-conjugated diene copolymer and silica. This enables production of a cross-linked rubber having further reduced heat buildup and further improved wear resistance.

Examples of aromatic vinyl compounds which can be used to form aromatic vinyl monomer units in the polymer block (A) are the same aromatic viny compounds listed above. Among these, preferred is styrene. These aromatic vinyl compounds may be used alone or in combination of two or more.

Although the polymer block (A) preferably consists only of isoprene monomer units or isoprene monomer units and aromatic vinyl monomer units, additional monomer units may be present as needed in addition to isoprene monomer units or isoprene monomer units and aromatic vinyl monomer units. Examples of additional compounds which can be used to form such additional monomer units include conjugated diene compounds other than isoprene, such as 1,3-butadiene, 2,3-dimethyl-1,3-butadiene, 2-chloro-1,3-butadiene, 1,3-pentadiene, and 1,3-hexadiene; α,β-unsaturated nitriles such as acrylonitrile and methacrylonitrile; unsaturated carboxylic acids or acid anhydrides such as acrylic acid, methacrylic acid, and maleic anhydride; unsaturated carboxylic acid esters such as methyl methacrylate, ethyl acrylate, and butyl acrylate; unconjugated dienes such as 1,5-hexadiene, 1,6-heptadiene, 1,7-octadiene, dicyclopentadiene, and 5-ethylidene-2-norbornene; and the like. Among these, preferred is 1,3-butadiene. These additional monomers may be used alone or in combination of two or more. The content of additional monomer units in the polymer block (A) is preferably 20% by weight or less, more preferably 10% by weight or less, still more preferably 6% by weight or less.

In the present invention, the polymer block (A) in the aromatic vinyl-conjugated diene copolymer chain is formed by polymerizing the monomers including isoprene or isoprene and the aromatic vinyl compound using a polymerization initiator in an inert solvent. The polymer block (A) formed has an active end.

Examples of inert solvents which can be used in polymerization of the monomers including isoprene or isoprene and the aromatic vinyl compound to form the polymer block (A) are the same inert solvents listed above. The amount of the inert solvent used is selected to provide a monomer concentration of preferably 1 to 80% by weight, more preferably 10 to 50% by weight.

Any polymerization initiator can be used without limitation to form the polymer block (A) as long as the monomers including isoprene or isoprene and the aromatic vinyl compound are polymerized to provide a polymer chain having an active end. Specific examples thereof are the same polymerization initiators listed above.

The amount of the polymerization initiator used can be selected according to the desired molecular weight, and is preferably 4 to 250 mmol, more preferably 6 to 200 mmol, particularly preferably 10 to 70 mmol per 100 g of the monomers including isoprene or isoprene and the aromatic vinyl compound.

The polymerization temperature in polymerization of the monomers including isoprene or isoprene and the aromatic vinyl compound is preferably -80 to +150°C, more preferably 0 to 100°C, still more preferably 20 to 90°C. The polymerization mode may be any mode such as batch or continuous. The bonding form may be any of various bonding forms such as block, tapered, and random forms.

The polymer block (A) is preferably formed by polymerizing the monomers including isoprene or isoprene and the aromatic vinyl compound in the presence of a polar compound. Specifically, a polar compound is used in an amount of preferably 0.01 to 100 mol, more preferably 0.03 to 30 mol, still more preferably 0.05 to 1 mol per mol of the polymerization initiator. Such use of a polar compound in the polymerization enables suitable control of the vinyl bond content of isoprene monomer units in the polymer block (A). The vinyl bonds in isoprene units may be either in the 1,2-vinyl form or in the 3,4-vinyl form.

Examples of methods for polymerizing the monomers including isoprene or isoprene and the aromatic vinyl compound in the presence of a polar compound include, but are not particularly limited to, methods such as performing polymerization in an inert solvent for polymerization containing the polar compound. Examples of usable polar compounds are the same polar compounds listed above.

The weight average molecular weight (Mw) of the polymer block (A) is preferably 500 to 15,000, more preferably 1,000 to 12,000, particularly preferably 1,500 to 10,000 when determined as a polystyrene-equivalent value by gel permeation chromatography. When the weight average molecular weight of the polymer block (A) is controlled within the above ranges, a cross-linked rubber having further reduced heat buildup and further improved wear resistance can be obtained.

The molecular weight distribution, which is represented by the ratio (Mw/Mn) of the weight average molecular weight (Mw) to the number average molecular weight (Mn), of the polymer block (A) is preferably 1.0 to 1.5, more preferably 1.0 to 1.3. Control of the molecular weight distribution (Mw/Mn) value of the polymer block (A) within the above ranges leads to easy production of an aromatic vinyl-conjugated diene copolymer.

### [Polymer block (B)]

According to one embodiment of the present invention, although it is sufficient that the polymer block (B) in the aromatic vinyl-conjugated diene copolymer chain contains 1,3-butadiene monomer units and aromatic vinyl monomer units, the polymer block (B) preferably contains 45 to 98% by weight of 1,3-butadiene monomer units and 2 to 55% by weight of aromatic vinyl monomer units, more preferably 60 to 97% by weight of 1,3-butadiene monomer units and 3 to 40% by weight of aromatic vinyl monomer units. When the contents of 1,3-butadiene monomer units and aromatic vinyl monomer units are controlled within the above ranges, a cross-linked rubber having further reduced heat buildup and further improved wear resistance can be obtained.

Examples of aromatic vinyl compounds which can be used to form aromatic vinyl monomer units in the polymer block (B) are the same aromatic vinyl compounds listed above. Among them, preferred is styrene.

Although the polymer block (B) preferably consists only of 1,3-butadiene units and aromatic vinyl monomer units, additional monomer units may be present as needed in addition to 1,3-butadiene units and aromatic vinyl monomer units as long as the essential features of the present invention are not impaired. Examples of additional monomers which can be used to form such additional monomer units are the same compounds listed above for the polymer block (A) (except 1,3-butadiene). Isoprene may be used as such an additional monomer. The content of additional monomer units in the polymer block (B) is preferably 10% by weight or less, more preferably 5% by weight or less.

In one embodiment of the present invention, the polymer block (B) is formed as one molecule with the polymer block (A) by mixing the polymer block (A) having an active end described above and the monomers including 1,3-butadiene and the aromatic vinyl compound to continue polymerization. The resulting polymer block (B) has an active end while the polymer block (A) loses the active end.

In the polymerization of the polymer block (A) and the monomers including 1,3-butadiene and the aromatic vinyl compound to form the polymer block (B), any inert solvent may be used without imitation, and any of the same inert solvents listed above can be used.

The amount of the polymer block (A) having an active end used in formation of the polymer block (B) may be selected according to the desired molecular weight, and is in the range of preferably 0.1 to 5 mmol, more preferably 0.15 to 2 mmol, still more preferably 0.2 to 1.5 mmol per 100 g of the monomers including 1,3-butadiene and the aromatic vinyl compound.

The polymer block (A) and the monomers including 1,3-butadiene and the aromatic vinyl compound may be mixed by any method without limitation. The polymer block (A) having an active end may be added in a solution of the monomers including 1,3-butadiene and the aromatic vinyl compound, or the monomers including 1,3-butadiene and the aromatic vinyl compound may be added to a solution of the polymer block (A) having an active end. From the viewpoint of control of polymerization, a preferred method is adding the polymer block (A) having an active end to a solution of the monomers including 1,3-butadiene and the aromatic vinyl compound.

The polymerization temperature in polymerization of the monomers including 1,3-butadiene and the aromatic vinyl compound is preferably -80 to +150°C, more preferably 0 to 100°C, still more preferably 20 to 90°C. Although the polymerization mode may be any mode such as batch or continuous, a batch mode is preferable in order to ensure easy control of the randomness of bonding.

The form of monomers bonded in the polymer block (B) may be any of various bonding forms such as block, tapered, and random forms. Among these, preferred is a random form. In the case of a random form, a cross-linked rubber having a greater balance of low heat buildup and wear resistance can be obtained. In order to randomly bond 1,3-butadiene and the aromatic vinyl compound, 1,3-butadiene or 1,3-butadiene and the aromatic vinyl compound is/are preferably fed continuously or intermittently to the polymerization system during polymerization such that the ratio of the aromatic vinyl compound to the total of 1,3-butadiene and the aromatic vinyl compound in the polymerization system does not increase too high.

In one embodiment of the present invention, the polymer block (B) is preferably formed in the same manner as the polymer block (A) by polymerizing the monomers including 1,3-butadiene and the aromatic vinyl compound in the presence of a polar compound. Specifically, a polar compound is used in an amount of preferably 0.01 to 0.50 mol, more preferably 0.05 to 0.40 mol, still more preferably 0.08 to 0.35 mol per mol of the polymerization initiator. Such use of a polar compound in the polymerization enables suitable control of the vinyl bond content of 1,3-butadiene monomer units in the polymer block (B). As a result, the vinyl content of conjugated diene monomer units in the aromatic vinyl-conjugated diene copolymer finally obtained can be suitably controlled within the ranges described above.

The polymerization of the monomers including 1,3-butadiene and the aromatic vinyl compound in the presence of a polar compound may be performed by any method without limitation. Examples thereof include methods such as performing polymerization in an insert solution containing the poler compound. In this method, the polar compound is added such that the total of the amount of the polar compound added to form the polymer block (A) and the amount of the polar compound additionally added falls within the ranges described above. For this reason, when the polymer block (A) is formed in the presence of an amount of the polar compound sufficient to control the vinyl bond content of 1,3-butadiene monomer units in the polymer block (B), further addition of the polar compound is not needed. The polar compound may be any of the same polar compounds listed above.

Thus, an aromatic vinyl-conjugated diene copolymer chain containing the polymer block (A) and the polymer block (B) and having an active end can be obtained. In one embodiment of the present invention, although from the viewpoint of productivity, it is preferable that the aromatic vinyl-conjugated diene copolymer chain having an active end consist of a polymer block (A)-polymer block (B) chain, and the polymer block (B) have an active end, two or more polymer blocks (A) may be present, and an additional polymer block may be present. Examples of such aromatic vinyl-conjugated diene copolymer chains having an active end include polymer block (A)-polymer block (B)-polymer block (A) and the like. In this case, an active end is formed at the end of the polymer block (A) formed after the polymer block (B). In the case where the polymer block (A) is formed on the active end side of the aromatic vinyl conjugated diene copolymer chain, the amount of isoprene used is preferably 10 to 100 mol, more preferably 15 to 70 mol, particularly preferably 20 to 35 mol per mol of the polymerization initiator used in the first polymerization reaction (polymerization reaction to form the first polymer block (A)).

The weight ratio of the polymer block (A) to the polymer block (B) (weight of polymer block (A)/weight of polymer block (B)) of the aromatic vinyl-conjugated diene copolymer chain having an active end obtained in one embodiment of the present invention (in the case where multiple polymer blocks (A) and multiple polymer blocks (B) are present, the weight ratio based on the total weights thereof) is preferably 0.001 to 0.2, more preferably 0.005 to 0.1, particularly preferably 0.01 to 0.05. When the weight ratio of the polymer block (A) and the polymer block (B) is controlled within the above ranges, a cross-linked rubber having a greater balance of low heat buildup and wear resistance can be obtained.

### <Modification step>

Next, in the modification step, the aromatic vinyl-conjugated diene copolymer chain having an active end obtained in the polymerization step described above is reacted with a modifier having a functional group interactive with silica.

The modifier having a functional group interactive with silica used in the modification step is not particularly limited, and may be any compound which is reactive with the aromatic vinyl-conjugated diene copolymer chain having an active end obtained in the polymerization step described above, and has a functional group interactive with silica. Examples of the functional group interactive with silica include, but are not particularly limited to, nitrogen atom-containing functional groups, silicon atom-containing functional groups, oxygen atom-containing functional groups, and the like. Among these, preferred are silicon atom-containing functional groups, and preferred are groups having a structure represented by Si-OR^{a} (wherein R^{a} is a hydrogen atom or a hydrocarbyl group optionally having a substituent) because they are more interactive with silica.

Suitable modifiers having such a functional group interactive with silica for use in the present invention are siloxane compounds. Such siloxane compounds may be any compounds without limitation as long as they have the structure represented by (-Si-O-Si-). Preferred are organosiloxanes having an organic group in addition to the structure represented by (-Si-O-Si-), and more preferred are polyorganosiloxanes represented by General Formula (1) below.

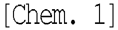

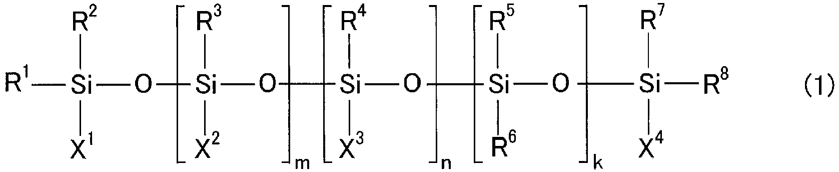

In General Formula (1), R¹ to R⁸ are alkyl groups having 1 to 6 carbon atoms or aryl groups having 6 to 12 carbon atoms, which may be the same or different from each other; X¹ and X⁴ are any groups selected from the group consisting of alkyl groups having 1 to 6 carbon atoms, aryl groups having 6 to 12 carbon atoms, alkoxy groups having 1 to 5 carbon atoms, and epoxy group-containing group having 4 to 12 carbon atoms, which may be the same or different from each other; X² is an alkoxy group having 1 to 5 carbon atoms or an epoxy group-containing group having 4 to 12 carbon atoms, and if multiple X²s are present, they may be the same or different from each other; X³ is a group containing 2 to 20 repeating units of an alkylene glycol, and if multiple X³s are present, they may be the same or different from each other; "m" is an integer of 1 to 200, "n" is an integer of 0 to 200, "k" is an integer of 0 to 200, and "m+n+k" is 1 or more.)

For the polyorganosiloxanes represented by General Formula (1), examples of alkyl groups having 1 to 6 carbon atoms which may form R¹ to R⁸, X¹, and X⁴ in General Formula (1) include a methyl group, an ethyl group, an n-propyl group, an isopropyl group, a butyl group, a pentyl group, a hexyl group, a cyclohexyl group, and the like. Examples of aryl groups having 6 to 12 carbon atoms include a phenyl group, a methylphenyl group, and the like. Among these, preferred are a methyl group and an ethyl group because of ease of production of these polyorganosiloxanes themselves.

Examples of alkoxy groups having 1 to 5 carbon atoms which may form X¹ X², and X⁴ in the polyorganosiloxanes represented by General Formula (1) include a methoxy group, an ethoxy group, a propoxy group, an isopropoxy group, an butoxy group, and the like. Among these, preferred are a methoxy group and an ethoxy group because of ease of production of these polyorganosiloxanes themselves.

Examples of epoxy group-containing group having 4 to 12 carbon atoms which may form X¹ X², and X⁴ in the polyorganosiloxanes represented by General Formula (1) include groups represented by General Formula (2).

-Z³-Z⁴-E² (2)

In General Formula (2), Z³ is an alkylene or alkylarylene group having 1 to 10 carbon atoms, Z⁴ is a methylene group, a sulfur atom, or an oxygen atom, and E² is an epoxy group-containing hydrocarbon group having 2 to 10 carbon atoms.

Preferred groups represented by General Formula (2) are those wherein Z⁴ is an oxygen atom, more preferred groups are those wherein Z⁴ is an oxygen atom and E² is a glycidyl group, and particularly preferred groups are those wherein Z³ is an alkylene group having 1 to 3 carbon atoms, Z⁴ is an oxygen atom, and E² is a glycidyl group.

In the polyorganosiloxanes represented by General Formula (1), X¹ and X⁴ are each preferably an epoxy group-containing group having 4 to 12 carbon atoms or an alkyl group having 1 to 6 carbon atoms among those listed above. X² is preferably an epoxy group-containing group having 4 to 12 carbon atoms among those listed above. More preferably, X¹ and X⁴ are each an alkyl group having 1 to 6 carbon atoms and X² is an epoxy group-containing group having 4 to 12 carbon atoms.

In the organosiloxanes represented by General Formula (1), preferred groups for X³, that is, preferred groups containing 2 to 20 repeating units of an alkylene glycol are groups represented by General Formula (3) below.

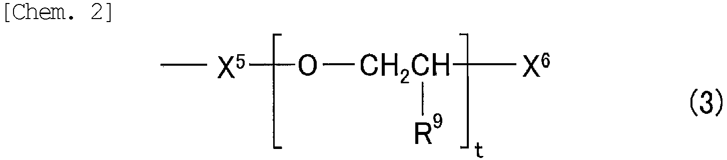

In General Formula (3), "t" is an integer of 2 to 20, X⁵ is an alkylene or alkylarylene group having 2 to 10 carbon atoms, R⁹ is a hydrogen atom or a methyl group, and X⁶ is an alkoxy or aryloxy group having 1 to 10 carbon atoms. Among these, preferred are those wherein "t" is an integer of 2 to 8, X⁵ is an alkylene group having 3 carbon atoms, R⁹ is a hydrogen atom, and X⁶ is a methoxy group.

In the polyorganosiloxanes represented by General Formula (1), "m" is an integer of 1 to 200, preferably an integer of 20 to 150, more preferably an integer of 30 to 120. Those wherein "m" is 1 or more increase the coupling ratio of the resulting aromatic vinyl-conjugated diene copolymer, which leads to further reduced heat buildup and further improved wear resistance. Moreover, when "m" is 200 or less, such polyorganosiloxanes represented by General Formula (1) themselves can be easily produced, and are also easier to handle because their viscosity is not too high.

In the polyorganosiloxanes represented by General Formula (1), "n" is an integer of 0 to 200, preferably an integer of 0 to 150, more preferably an integer of 0 to 120, and "k" is an integer of 0 to 200, preferably an integer of 0 to 150, more preferably an integer of 0 to 130. The total number of "m", "n", and "k" is 1 or more, preferably 1 to 400, more preferably 20 to 300, particularly preferably 30 to 250. When the total number of "m", "n", and "k" is 1 or more, the reaction of such a polyorganosiloxane represented by General Formula (1) and the aromatic vinyl-conjugated diene copolymer chain having an active end easily proceeds, and when the total number of "m", "n", and "k" is 400 or less, such polyorganosiloxanes represented by General Formula (1) themselves can be easily produced, and are also easier to handle because their viscosity is not too high.

The amount of the siloxane compound used in the modification step is preferably 0.1 mol or more, more preferably 0.2 mol or more, still more preferably 0.5 mol or more, particularly preferably 1.0 mol or more, more preferably 1.1 mol or more based on the number of (-Si-O-) repeating units in the siloxane compound per mol of the polymerization initiator used in the polymerization in the polymerization step described above. Moreover, the amount is preferably 10 mol or less, more preferably 5 mol or less, still more preferably 2.5 mol or less, particularly preferably 2 mol or less. When the amount of the siloxane compound used is within the above ranges, a cross-linked rubber having further reduced heat buildup can be obtained.

Especially, the amount of the siloxane compound used is particularly preferably 1 mol or more based on the number of (-Si-O-) repeating units per mol of the polymerization initiator because such an amount enables the active end of the aromatic vinyl-conjugated diene copolymer chain having an active end obtained in the polymerization step to almost completely react with the siloxane compound. Specifically, an alkyl metal group, that is, a group represented by -R-M⁺ (wherein R is a hydrocarbon group forming the polymer chain end, and M is an alkali metal atom, an alkaline earth metal atom, or a lanthanide series metal atom) as the active end of the aromatic vinyl-conjugated diene copolymer chain having an active end obtained in the polymerization step can be almost completely consumed.

The siloxane compound may be reacted with the aromatic vinyl-conjugated diene copolymer chain having an active end by any method without limitation. Examples thereof include methods such as mixing the substances in a solvent capable of dissolving them. In this method, as the solvent, any of those listed as inert solvents for the polymerization step described above or the like may be used. Moreover, in this method, a preferable and simple process is adding the siloxane compound to the polymer solution used in the polymerization for obtaining the aromatic vinyl-conjugated diene copolymer chain having an active end. Further, in this case, the siloxane compound is preferably dissolved in an inert solvent, and then added to the polymerization system. The solution concentration is preferably in the range of 1 to 50% by weight. The reaction temperature is not particularly limited, but is typically 0 to 120°C. The reaction time is also not particularly limited, but is typically 1 minute to 1 hour.

Although the timing of adding the siloxane compound to the solution containing the aromatic vinyl-conjugated diene copolymer chain having an active end is not particularly limited, it is preferable to add the siloxane compound to the solution when the polymerization reaction is not completed and the monomers are also present in the solution containing the aromatic vinyl-conjugated diene copolymer chain having an active end, more specifically when the monomers are present in an amount of 100 ppm or more, more preferably 300 to 50,000 ppm in the solution containing the aromatic vinyl-conjugated diene copolymer chain having an active end. Such addition of the siloxane compound suppresses secondary reactions between the aromatic vinyl-conjugated diene copolymer chain having an active end and impurities and the like in the polymerization system and enables successful control of the reaction.

The modification step is for reacting the siloxane compound as a modifier with the active end of the aromatic vinyl-conjugated diene copolymer chain having an active end obtained in the polymerization step. The active end of the aromatic vinyl-conjugated diene copolymer chain reacts with the silicon atom in the siloxane structure. Alternatively, a portion of the active end of the aromatic vinyl-conjugated diene copolymer chain reacts with an alkoxy group or an epoxy group in a side chain of a polyorganosiloxane represented by General Formula (1) (alkoxy group, epoxy group, or the like forming X² which is an essential moiety in General Formula (1)). In the modification step, the reaction described above results in introduction of a modifying structure derived from the siloxane into the aromatic vinyl-conjugated diene copolymer chain. Thus, the functional group interactive with silica can be introduced to the aromatic vinyl-conjugated diene copolymer chain.

Specifically, it is presumed that as a result of the reaction of the active end of the aromatic vinyl-conjugated diene copolymer chain with the silicon atom in the siloxane structure, the aromatic vinyl-conjugated diene copolymer chain forms a new bond between the silicon atom in the siloxane structure and the active end of the aromatic vinyl-conjugated diene copolymer chain such that a modifying structure derived from the siloxane is introduced to the active end of the aromatic vinyl-conjugated diene copolymer chain, and at the same time, the oxygen atom in the siloxane structure and the metal atom in the active end of the aromatic vinyl-conjugated diene copolymer chain form a group represented by -O-M⁺ (wherein M is an alkali metal atom, an alkaline earth metal atom, or a lanthanide-series metal atom) as a residue of the reaction between them.

Alternatively, it is presumed that when a polyorganosiloxane represented by General Formula (1) is used as the siloxane compound, the active end of the aromatic vinyl-conjugated diene copolymer chain reacts with an epoxy group in a side chain of the polyorganosiloxane such that the epoxy ring is opened to form a new bond between the carbon atom at the ring-opened site of the epoxy group and the active end of the aromatic vinyl-conjugated diene copolymer chain. As a result, the siloxane structure is introduced to the end of the aromatic vinyl-conjugated diene copolymer chain, and at the same time, the oxygen atom in the epoxy group and the metal atom in the active end of the aromatic vinyl-conjugated diene copolymer chain form a group represented by -O-M⁺ as a residue of the reaction between them. Alternatively, the active end of the aromatic vinyl-conjugated diene copolymer chain reacts with an alkoxide group in a side chain of the polyorganosiloxane to eliminate the alkoxy group, and the aromatic vinyl-conjugated diene copolymer chain forms a new bond between the silicon atom in the siloxane structure and the active end of the aromatic vinyl-conjugated diene copolymer chain such that the siloxane structure is introduced to the end of the aromatic vinyl-conjugated diene copolymer chain.

In particular, when the amount of the siloxane compound used in the modification step is 1 mol or more based on the number of (-Si-O-) repeating units per mol of the polymerization initiator, a modifying structure derived from the siloxane can be introduced into almost all aromatic vinyl-conjugated diene copolymer chains having an active end obtained in the polymerization step. Accordingly, the alkyl metal group as the active end of the aromatic vinyl-conjugated diene copolymer chain having an active end obtained in the polymerization step, that is, the - R-M⁺ group can be almost completely consumed, and in place thereof, a group represented by -O-M⁺ is formed as a reaction residue.

In the present invention, before the modifier having a functional group interactive with silica, such as a siloxane compound, is reacted with the aromatic vinyl-conjugated diene copolymer chain having an active end, a coupling agent, a modifier, or the like typically conventionally used may be added to the polymerization system to cause coupling or modification of a portion of the active end of the aromatic vinyl-conjugated diene copolymer chain having an active end as far as the advantageous effects of the present invention are not impaired.

In the present invention, a compound having a protected primary amino group and an alkoxysilyl group can be used as the modifier having a functional group interactive with silica. Examples thereof include N,N-bis(trimethylsilyl)aminopropylmethyldimethoxysilane, 1-trimethylsilyl-2,2-dimethoxy-1-aza-2-silacyclopentane, N,N-bis(trimethylsilyl)aminopropyltrimethoxysilane, N,N-bis(trimethylsilyl)aminopropyltriethoxysilane, N,N-bis(trimethylsilyl)aminopropylmethyldiethoxysilane, N,N-bis(trimethylsilyl)aminoethyltrimethoxysilane, N,N-bis(trimethylsilyl)aminoethyltriethoxysilane, N,N-bis(trimethylsilyl)aminoethylmethyldimethoxysilane, N,N-bis(trimethylsilyl)aminoethylmethyldiethoxysilane, and the like.

Moreover, in the present invention, a polyfunctional compound having two or more epoxy groups and one or more nitrogen-containing groups in the molecule can be used as the modifier having a functional group interactive with silica. More preferably, a polyfunctional compound represented by General Formula (4) below is used.

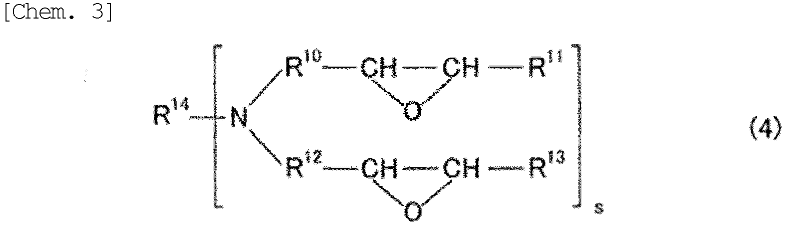

In General Formula (4), R¹⁰ and R¹¹ are each a hydrocarbon group having 1 to 10 carbon atoms or a hydrocarbon group having 1 to 10 carbon atoms and having an ether structure and/or a tertiary amine, R¹² and R¹³ are each hydrogen, a hydrocarbon group having 1 to 20 carbon atoms, or a hydrocarbon group having 1 to 20 carbon atoms and having an ether and/or a tertiary amine, R¹⁴ is a hydrocarbon group having 1 to 20 carbon atoms or a hydrocarbon group having 1 to 20 carbon atoms and having at least one group of ether structures, tertiary amines, epoxy, carbonyl, and halogens, and "s" is 1 to 6.

In the present invention, a compound having a silyl group with two or more alkoxy substituent groups and having one or more nitrogen atoms can also be used as the modifier having a functional group interactive with silica. Examples of such compounds include compounds represented by General Formula (5) below, hydrocarbyloxysilanes having a cyclic amino group including two or more nitrogen atoms represented by General Formula (6) below, hydrocarbyloxysilanes having functional groups such as other cyclic amines, non-cyclic amines, imines, and isocyanates, cyclic azasilanes, and the like.

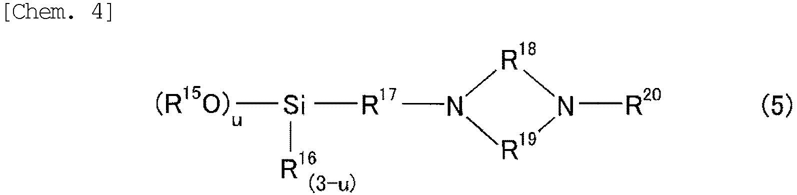

(In General Formula (5), R¹⁵ and R¹⁶ are each independently an alkyl or aryl group having 1 to 20 carbon atoms, R¹⁷ is an alkylene group having 1 to 20 carbon atoms, R¹⁸ and R¹⁹ are hydrocarbon groups having 1 to 6 carbon atoms, which may be the same or different, and form a 5-membered or larger ring structure with the two adjacent Ns, R²⁰ is a hydrocarbon group having 1 to 20 carbon atoms or a triorgano-substituted silyl group, and "u" is an integer of 2 or 3.)

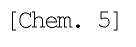

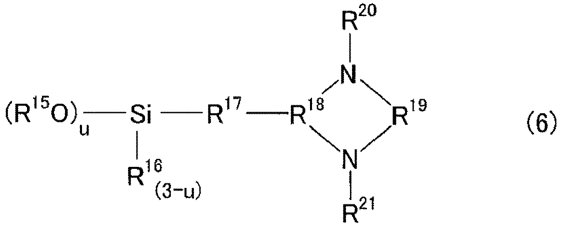

(In General Formula (6), R¹⁵ to R²⁰ and "u" are as defined above for General Formula (5), and R²¹ is a hydrocarbon group having 1 to 20 carbon atoms or an organo-substituted silyl group.)

In the present invention, a silane-sulfide compound represented by General Formula (7) below can also be used as the modifier having a functional group interactive with silica.

(R²²O)ₓ(R²³)_{y}Si-R²⁴-S-SiR²⁵ (7)

(In General Formula (7), Si represents silicon, S represents sulfur, O represents oxygen, "x" is an integer selected from 1, 2, and 3, "y" is an integer selected from 0, 1, and 2, and "x+y" is 3. R²², R²³, and R²⁵ are alkyl groups having 1 to 16 carbon atoms, which may be the same or different from one another, and R²⁴ is an aryl group, an alkylaryl group, or an alkyl group having 1 to 16 carbon atoms.)

In the present invention, a reactive polysiloxane compound represented by General Formula (8) below can be used as the siloxane compound having a functional group interactive with silica.

Y¹-CH₂CH₂-Si(R²⁶)(R²⁷)-{O-Si(R²⁶)(R²⁷)}_{z}-CH₂CH₂-Y¹ (8)

In General Formula (8), Y¹ is (X⁷)ₐ(R²⁸)_{b}Si- wherein X⁷ is a halogen and R²⁸ is a lower alkyl group having 20 or less carbon atoms. R²⁶ and R²⁷ are each a lower alkyl group having 20 or less carbon atoms, "a" is 2 or 3, "b" is 0 or 1, "a+b" is 3, and "z" is 1 to 50000.

In the present invention, an amide compound may be used as an end modifier. Examples thereof include N-substituted cyclic amides such as N-substituted cyclic amides such as N-methyl-2-pyrrolidone, N-vinyl-2-pyrrolidone, N-phenyl-2-pyrrolidone, and N-methyl-ε-caprolactam; N-substituted cyclic ureas such as 1,3-dimethylethylene urea and 1,3-diethyl-2-imidazolidinone; N-substituted aminoketones such as 4,4'-bis(dimethylamino)benzophenone and 4,4'-bis(diethylamino)benzophenone; aromatic isocyanates such as diphenylmethane diisocyanate and 2,4-tolylene diisocyanate; N,N-disubstituted aminoalkyl methacrylamides such as N,N-dimethylaminopropyl methacrylamide; N-substituted aminoaldehydes such as 4-N,N-dimethylaminobenzaldehyde; N-substituted carbodiimides such as dicyclohexylcarbodiimide; Schiff bases such as N-ethylethylideneimine and N-methylbenzylideneimine; and pyridyl group-containing vinyl compounds such as 4-vinylpyridine.

When the modification is performed using a siloxane compound as the modifier having a functional group interactive with silica, it is preferred to further react a compound represented by General Formula (9) below with the aromatic vinyl-conjugated diene copolymer chain after the reaction with the siloxane compound.

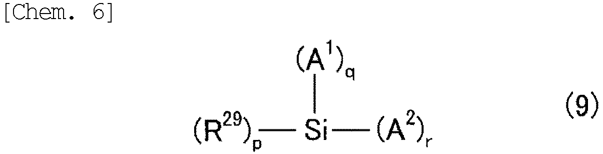

In General Formula (9), R²⁹ is a hydrocarbyl group, A¹ is a group reactive with an alkyl metal group as the active end of the aromatic vinyl-conjugated diene copolymer chain having an active end or the reaction residue which is created by the reaction between the aromatic vinyl-conjugated diene copolymer chain having an active end and the siloxane compound, A² is a nitrogen atom-containing group, "p" is an integer to 0 to 2, "q" is an integer of 1 to 3, "r" is an integer of 1 to 3, and "p+q+r" is 4.

The compound represented by General Formula (9) is presumed to react with the alkyl metal group as the active end of the aromatic vinyl-conjugated diene copolymer chain obtained in the polymerization step, that is, -R-M⁺, or the group represented by -O-M⁺ as the reaction residue of the reaction with the siloxane compound (which is intended to include a hydroxyl group created as a result of conversion by hydrolysis of the group represented by -O-M⁺). When the siloxane compound is used in an amount of 1 mol or more based on the number of (-Si-O-) repeating units per mol of the polymerization initiator to almost completely consume the group represented by -R-M⁺, the compound represented by General Formula (9) can be almost completely reacted with the group represented by -O-M⁺ as the reaction residue of the reaction with the siloxane compound. Thus, the modifying structure derived from the compound represented by General Formula (9) can be appropriately introduced via the structure derived from the siloxane compound to the aromatic vinyl-conjugated diene copolymer chain. The use of the aromatic vinyl-conjugated diene copolymer thus obtained enables production of a cross-linked rubber having further reduced heat buildup and further improved wear resistance.

In the compound represented by General Formula (9), R²⁹ in General Formula (9) is a hydrocarbyl group, such as an alkyl group, a cycloalkyl group, an alkenyl group, an aryl group, or an aralkyl group, and is preferably an alkyl group having 1 to 6 carbon atoms. Examples of alkyl groups having 1 to 6 carbon atoms include a methyl group, an ethyl group, an n-propyl group, an isopropyl group, a butyl group, a pentyl group, a hexyl group, and the like. Among these, a methyl group and an ethyl group are more preferred, and a methyl group is particularly preferred.

In the compound represented by General Formula (9), A¹ in General Formula (9) is a group reactive with the alkyl metal group (i.e., R-M⁺) as the active end of the aromatic vinyl-conjugated diene copolymer chain having an active end or the reaction residue created by the reaction between the aromatic vinyl-conjugated diene copolymer chain having an active end and the siloxane compound (group typically represented by -O-M⁺), and is preferably a group represented by -OR³⁰ (wherein R³⁰ is a hydrogen atom or a hydrocarbyl group) . Examples of hydrocarbyl groups which can be R³⁰ include alkyl groups, cycloalkyl groups, alkenyl groups, aryl groups, aralkyl groups, and the like. From the viewpoint of reactivity with the alkyl metal group or the reaction residue, alkyl groups having 1 to 6 carbon atoms are preferred. Examples of alkyl groups having 1 to 6 carbon atoms include a methyl group, an ethyl group, an n-propyl group, an isopropyl group, a butyl group, a pentyl group, a hexyl group, and the like. Among these, a methyl group and an ethyl group are more preferred.

In the compound represented by General Formula (9), A² in General Formula (9) is a nitrogen atom-containing group, and is not particularly limited as long as the group has a nitrogen atom. Preferred are organic groups having a nitrogen atom, and examples thereof include a 3-aminopropyl group, a 4-aminobutyl group, a 3-(2-aminoethylamino)propyl group, a 2-dimethylaminoethyl group, a 3-dimethylaminopropyl group, a 3-diethylaminopropyl group, a 3-dipropylaminopropyl group, a 3-dibutylaminopropyl group, a 3-phenylmethylaminopropyl group, a 3-(4-methylpiperazinyl)propyl group, an N,N-bis(trimethylsilyl)aminopropyl group, an N,N-bis(triethylsilyl)aminopropyl group, an N,N',N'-tris(trimethylsilyl)-N-(2-aminoethyl)-3-aminopropyl group, and the like. In order to obtain a cross-linked rubber having further reduced heat buildup and further improved wear resistance, groups containing a primary amino group having active hydrogen atoms and/or a secondary amino group having an active hydrogen atom, such as a 3-aminopropyl group, a 4-aminobutyl group, and a 3-(2-aminoethylamino)propyl group, are preferred among these. Note that "active hydrogen atom" means a hydrogen atom bound to an atom other than carbon, and the binding energy thereof is preferably lower than that of the carbon-hydrogen bonds of a polymethylene chain.

In the compound represented by General Formula (9), "p" is an integer of 0 to 2, "q" is an integer of 1 to 3, "r" is an integer of 1 to 3, and "p+q+r" is 4. From the viewpoint of reactivity with the alkyl metal group as the active end of the aromatic vinyl-conjugated diene copolymer chain having an active end or the reaction residue created by the reaction of the aromatic vinyl-conjugated diene copolymer chain having an active end with the siloxane compound, "p", "q", and "r" are preferably an integer of 0 or 1, an integer of 2 or 3 and an integer of 1 or 2, respectively, and "p", "q", and "r" are more preferably 0, 3, and 1, respectively. Note that when p is 2, the two groups represented by R²⁹ in the molecule of the compound represented by General Formula (9) may be the same or different from each other. Similarly, when q is 2 or 3, the multiple groups represented by A¹ in the molecule of the compound represented by General Formula (9) may be the same or different from each other, and when r is 2 or 3, the multiple groups represented by A² in the molecule of the compound represented by General Formula (9) may be the same or different from each other.

Specific examples of compounds represented by General Formula (9) include, but are not particularly limited to, the followings: Examples of compounds in which A² in General Formula (9) is a group containing a primary amino group having active hydrogen atoms and/or a secondary amino group having an active hydrogen atom include compounds having a 3-aminopropyl group as A², such as 3-aminopropyldimethylmethoxysilane, 3-aminopropylmethyldimethoxysilane, 3-aminopropyltrimethoxysilane, 3-aminopropyldimethylethoxysilane, 3-aminopropylmethyldiethoxysilane, and 3-aminopropyltriethoxysilane; compounds having a 4-aminobutyl group as A², such as 4-aminobutyldimethylmethoxysilane, 4-aminobutylmethyldimethoxysilane, 4-aminobutyltrimethoxysilane, 4-aminobutyldimethylethoxysilane, 4-aminobutylmethyldiethoxysilane, and 4-aminobutyltriethoxysilane; compounds having a 3-(2-aminoethylamino)propyl group as A², such as 3-(2-aminoethylamino)propyldimethylmethoxysilane, 3-(2-aminoethylamino)propylmethyldimethoxysilane, 3-(2-aminoethylamino)propyltrimethoxysilane, 3-(2-aminoethylamino)propyldimethylethoxysilane, 3-(2-aminoethylamino)propylmethyldiethoxysilane, and 3-(2-aminoethylamino)propyltrimethoxysilane; and the like.

Specific examples of compounds in which A² in General Formula (9) is a group other than groups containing a primary amino group having active hydrogen atoms and/or a secondary amino group having an active hydrogen atom include compounds having a 3-dimethylaminopropyl group as A², such as 3-dimethylaminopropyltrimethoxysilane, 3-dimethylaminopropylmethyldimethoxysilane, 3-dimethylaminopropyldimethylmethoxysilane, 3-dimethylaminopropyltriethoxysilane, 3-dimethylaminopropylmethyldiethoxysilane, and 3-dimethylaminopropyldimethylethoxysilane; compounds having a 3-diethylaminopropyl group as A², such as 3-diethylaminopropyltrimethoxysilane, 3-diethylaminopropylmethyldimethoxysilane, 3-diethylaminopropyldimethylmethoxysilane, 3-diethylaminopropyltriethoxysilane, 3-diethylaminopropylmethyldiethoxysilane, and 3-diethylaminopropyldimethylethoxysilane; compounds having a 3-dipropylaminopropyl group as A², such as 3-dipropylaminopropyltrimethoxysilane, 3-dipropylaminopropylmethyldimethoxysilane, 3-dipropylaminopropyldimethylmethoxysilane, 3-dipropylaminopropyltriethoxysilane, 3-dipropylaminopropylmethyldiethoxysilane, and 3-dipropylaminopropyldimethylethoxysilane; compounds having a 3-dibutylaminopropyl group as A², such as 3-dibutylaminopropyltrimethoxysilane, 3-dibutylaminopropylmethyldimethoxysilane, 3-dibutylaminopropyldimethylmethoxysilane, 3-dibutylaminopropyltriethoxysilane, 3-dibutylaminopropylmethyldiethoxysilane, and 3-dibutylaminopropyldimethylethoxysilane; compounds having a 3-phenylmethylaminopropyl group as A², such as 3-phenylmethylaminopropyltrimethoxysilane, 3-phenylmethylaminopropylmethyldimethoxysilane, 3-phenylmethylaminopropyldimethylmethoxysilane, 3-phenylmethylaminopropyltriethoxysilane, 3-phenylmethylaminopropylmethyldiethoxysilane, and 3-phenylmethylaminopropyldimethylethoxysilane; compounds having a 3-(4-methylpiperazinyl)propyl group as A², such as 3-(4-methylpiperazinyl)propyltrimethoxysilane, 3-(4-methylpiperazinyl)propylmethyldimethoxysilane, 3-(4-methylpiperazinyl)propyldimethylmethoxysilane, 3-(4-methylpiperazinyl)propyltriethoxysilane, 3-(4-methylpiperazinyl)propylmethyldiethoxysilane, and 3-(4-methylpiperazinyl)propyldimethylethoxysilane;
compounds having an N,N-bis(trimethylsilyl)aminopropyl group as A², such as N,N-bis(trimethylsilyl)aminopropyltrimethoxysilane, N,N-bis(trimethylsilyl)aminopropyltriethoxysilane, N,N-bis(trimethylsilyl)aminopropylmethyldimethoxysilane, and N,N-bis(trimethylsilyl)aminopropylmethyldiethoxysilane; compounds having an N,N-bis(triethylsilyl)aminopropyl group as A², such as N,N-bis(triethylsilyl)aminopropyltrimethoxysilane, N,N-bis(trimethylsilyl)aminopropyltriethoxysilane, N,N-bis(triethylsilyl)aminopropylmethyldimethoxysilane, and N,N-bis(triethylsilyl)aminopropylmethyldiethoxysilane; compounds having an N,N',N'-tris(trimethylsilyl)-N-(2-aminoethyl)-3-aminopropyl group as A², such as N,N',N'-tris(trimethylsilyl)-N-(2-aminoethyl)-3-aminopropyltrimethoxysilane, N,N',N'-tris(trimethylsilyl)-N-(2-aminoethyl)-3-aminopropyltriethoxysilane, N,N',N'-tris(trimethylsilyl)-N-(2-aminoethyl)-3-aminopropylmethyldimethoxysilane, and N,N',N'-tris(trimethylsilyl)-N-(2-aminoethyl)-3-aminopropylmethyldiethoxysilane; and the like.

The amount of the compound represented by General Formula (9) used is not particularly limited, but is preferably 0.1 to 5 mol, more preferably 0.2 to 2 mol, still more preferably 0.4 to 1.5 mol per mol of the polymerization initiator used in the polymerization step. When the amount of the compound represented by General Formula (9) used falls within the above ranges, a cross-linked rubber having further reduced heat buildup and further improved wear resistance can be obtained.

The timing of adding the compound represented by General Formula (9) to the solution containing the aromatic vinyl-conjugated diene copolymer chain is not particularly limited as long as it is added after addition of the siloxane compound. For example, the compound represented by General Formula (9) can be added to the solution containing the aromatic vinyl-conjugated diene copolymer chain when the polymerization reaction is not completed and the monomers are also present in the solution, more specifically when the monomers are present in an amount of 100 ppm or more, more preferably 300 to 50,000 ppm in the solution containing the aromatic vinyl-conjugated diene copolymer chain. The addition of the compound represented by General Formula (9) at such a timing suppresses secondary reactions between the aromatic vinyl-conjugated diene copolymer chain and impurities and the like in the polymerization system and enables successful control of the reaction. Alternatively, before or after the compound represented by General Formula (9) is added to the solution containing the aromatic vinyl-conjugated diene copolymer chain, water or an alcohol such as methanol may be added to the solution to hydrolyze the group represented by -O-M⁺ created as the reaction residue of the reaction with the siloxane compound into a hydroxyl group, and then the modification reaction may be performed. When the compound represented by General Formula (9) is added to the solution containing the aromatic vinyl-conjugated diene copolymer chain, the compound represented by General Formula (9) may be dissolved in an inert solvent before being added, or may be added as it is without being dissolved in an inert solvent. The reaction temperature and the reaction time may be the same as those for the reaction using the siloxane compound.

After the reaction with the compound represented by General Formula (9), a known polymerization terminator or the like is added as needed to deactivate the reaction system, and then an antioxidant such as a phenol-based stabilizer, a phosphorus-based stabilizer, or a sulfur-based stabilizer, a crumb forming agent, a scale inhibitor, and the like are added to the reaction solution as needed. Subsequently, the polymerization solvent is separated from the reaction solution by direct drying, steam stripping, or the like to recover the aromatic vinyl-conjugated diene copolymer. The aromatic vinyl-conjugated diene copolymer may be recovered as an oil extended rubber by mixing an extender oil with the polymer solution before the separation of the polymerization solvent from the reaction solution.

Examples of oil extenders used to collect the aromatic vinyl-conjugated diene copolymer as an oil extended rubber include paraffin-based, aromatic-based, and naphthene-based oil-based softening agents, plant-based softening agents, fatty acids, and the like. When an oil-based softening agent is used, the content of polycyclic aromatic compounds extracted by the method of IP346 (test method of THE INSTITUTE PETROLEUM of the U.K.) is preferably less than 3%. When an oil extender is used, the amount thereof is preferably 1 to 100 parts by weight, more preferably 2 to 60 parts by weight, further preferably 3 to 50 parts by weight with respect to 100 parts by weight of the aromatic vinyl-conjugated diene copolymer.

Although the above description is mainly based on the examples where a siloxane compound and a compound represented by General Formula (9) are used as the modifier having a functional group interactive with silica, the modifier having a functional group interactive with silica may be any compound which is reactive with the active end of the aromatic vinyl-conjugated diene copolymer chain having an active end obtained in the polymerization step and has a functional group interactive with silica, and is not particularly limited.

In order to introduce the functional group interactive with silica to the aromatic vinyl-conjugated diene copolymer, a method of introducing the functional group interactive with silica in the polymerization step can be selected instead of or in addition to the method of reacting the modifier having a functional group interactive with silica with the aromatic vinyl-conjugated diene copolymer chain having an active end obtained in the polymerization step. Specifically, in the polymerization step, a compound having a functional group reactive with the monomers used in the polymerization step and interactive with silica may also be copolymerized to introduce the functional group interactive with silica. Examples of the functional group interactive with silica include, but are not particularly limited to, nitrogen atom-containing functional groups, silicon atom-containing functional groups, oxygen atom-containing functional groups, and the like. Among these, preferred are silicon atom-containing functional groups because they are more interactive with silica.

Examples of silicon atom-containing modifiers which can be used in the polymerization step include
(dimethylamino)dimethylvinylsilane,
(ethylmethylamino)dimethylvinylsilane,
(diethylamino)dimethylvinylsilane, (ethyl-n-propylamino)dimethylvinylsilane,
(ethylisopropylamino)dimethylvinylsilane, (di-n-propylamino)dimethylvinylsilane, (diisopropylamino)dimethylvinylsilane,
(n-butyl-n-propylamino)dimethylvinylsilane, (di-n-butylamino)dimethylvinylsilane,
   (dimethylamono)diethylvinylsilane,
(ethylmethylamono)diethylvinylsilane, (diethylamino)diethylvinylsilane, (ethyl-n-propylamino)diethylvinylsilane,
(ethylisopropylamino)diethylvinylsilane, (di-n-propylamino)diethylvinylsilane, (diisopropylamino)diethylvinylsilane,
(n-butyl-n-propylamino)diethylvinylsilane, (di-n-butylamino)diethylvinylsilane,
   (dimethylamino)dipropylvinylsilane,
(ethylmethylamino)dipropylvinylsilane,
(diethylamino)dipropylvinylsilane, (ethyl-n-propylamino)dipropylvinylsilane,
(ethylisopropylamino)dipropylvinylsilane, (di-n-propylamino)dipropylvinylsilane, (diisopropylamino)dipropylvinylsilane,
(n-butyl-n-propylamino)dipropylvinylsilane, (di-n-butylamino)dipropylvinylsilane,
   (dimethylamono)dibutylvinylsilane,
(ethylmethylamono)dibutylvinylsilane, (diethylamino)dibutylvinylsilane, (ethyl-n-propylamino)dibutylvinylsilane,
(ethylisopropylamino)dibutylvinylsilane, (di-n-propylamino)dibutylvinylsilane, (diisopropylamino)dibutylvinylsilane,
(n-butyl-n-propylamino)dibutylvinylsilane, (di-n-butylamino)dibutylvinylsilane,
   {di(trimethylsilyl)amino}dimethylvinylsilane, {di(t-butyldimethylsilyl)amino}dimethylvinylsilane,
{di(trimethylsilyl)amino}diethylvinylsilane, {di(t-butyldimethylsilyl)amino}diethylvinylsilane,
bis(dimethylamino)methylvinylsilane,
bis(ethylmethylamino)methylvinylsilane,
bis(diethylamino)methylvinylsilane, bis(ethyl-n-propylamino)methylvinylsilane,
bis(ethylisopropylamino)methylvinylsilane, bis(di-n-propylamino)methylvinylsilane, bis(diisopropylamino)methylvinylsilane,
bis(n-butyl-n-propylamino)methylvinylsilane, bis(di-n-butylamino)methylvinylsilane,
   bis(dimethylamino)ethylvinylsilane,
bis(ethylmethylamino)ethylvinylsilane,
bis(diethylamino)ethylvinylsilane, bis(ethyl-n-propylamino)ethylvinylsilane, bis(ethylisopropylamino)ethylvinylsilane,
bis(di-n-propylamino)ethylvinylsilane,
bis(diisopropylamino)ethylvinylsilane, bis(n-butyl-n-propylamino)ethylvinylsilane, bis(di-n-butylamino)ethylvinylsilane,
   bis(dimethylamino)propylvinylsilane,
bis(ethylmethylamino)propylvinylsilane,
bis(diethylamino)propylvinylsilane, bis(ethyl-n-propylamino)propylvinylsilane,
bis(ethylisopropylamino)propylvinylsilane, bis(di-n-propylamino)propylvinylsilane, bis(diisopropylamino)propylvinylsilane,
bis(n-butyl-n-propylamino)propylvinylsilane, bis(di-n-butylamino)propylvinylsilane,
   bis(dimethylamino)butylvinylsilane,
bis(ethylmethylamino)butylvinylsilane,
bis(diethylamino)butylvinylsilane, bis(ethyl-n-propylamino)butylvinylsilane, bis(ethylisopropylamino)butylvinylsilane, bis(di-n-propylamino)butylvinylsilane,
bis(diisopropylamino)butylvinylsilane, bis(n-butyl-n-propylamino)butylvinylsilane, bis(di-n-butylamino)butylvinylsilane,
   bis(di(trimethylsilyl)amino)methylvinylsilane, bis{(t-butyldimethylsilyl)amino}methylvinylsilane,
bis{di(trimethylsililamino)ethylvinylsilane, bis{(t-butyldimethylsilyl)amino}ethylvinylsilane,
tri(dimethylamino)vinylsilane, tri(ethylmethylamino)vinylsilane,
tri(diethylamnino)vinylsilane, tri(ethylpropylamino)vinylsilane,
tri(dipropylamino)vinylsilane, tri(butylpropylamino)vinylsilane, and the like.

The compound having a functional group interactive with silica used in the polymerization step may be one or more selected from the group consisting of 4,4'-vinylidenebis(n,n-dimethylaniline), 3-(2-pyrolydinoethyl)styrene, 4-(2-pyrolydinoethyl)styrene, and (3-(2-pyrolydino-1-methylethyl)-alpha-methylstyrene.

The coupling ratio of the aromatic vinyl-conjugated diene copolymer used in the present invention is not particularly limited, but is preferably 10 to 90% by weight, more preferably 20 to 80% by weight, particularly preferably 30 to 70% by weight. When the coupling ratio is controlled within the above ranges, the use of the aromatic vinyl-conjugated diene copolymer results in a cross-lined rubber having further reduced heat buildup and further improved wear resistance. Note that coupling ratio refers to the weight fraction of polymer molecules having a molecular weight at least 1.8 times the peak top molecular weight of the aromatic vinyl-conjugated diene copolymer chain having an active end before the reactions with the modifier having a functional group interactive with silica, such as the siloxane compound or the compound represented by General Formula (9), and a coupling agent and an additional modifier optionally used, in the total weight of the finally obtained aromatic vinyl-conjugated diene copolymer. The molecular weights are measured as polystyrene-equivalent molecular weights by gel permeation chromatography.

Examples of the coupling agent optionally used in the present invention include, but are not particularly limited to, halogenated metal compounds. Specific examples thereof include silicon tetrachloride, hexachlorodisilane, bis(trichlorosilyl)methane, 1,2-bis(trichlorosilyl)ethane, 1,3-bis(trichlorosilyl)propane, 1,4-bis(trichlorosilyl)butane, 1,5-bis(trichlorosilyl)pentane, and 1,6-bis(trichlorosilyl)hexane. Among these, hexachlorodisilane, 1,2-bis(trichlorosilyl)ethane, and 1,6-bis(trichlorosilyl)hexane can be mentioned. Alternatively, tin tetrachloride may be used.

The weight average molecular weight (Mw) of the aromatic vinyl-conjugated diene copolymer used in the present invention is preferably 150,000 to 3,000,000, more preferably 170,000 to 2,000,000, still more preferably 200,000 to 1,500,000, still further more preferably 250,000 to 1,000,000, particularly preferably 350,000 to 650,000, most preferably 380,000 to 520,000 as a polystyrene-equivalent value determined by gel permeation chromatography. Control of the weight average molecular weight of the aromatic vinyl-conjugated diene copolymer within the above ranges facilitates mixing of the silica with the aromatic vinyl-conjugated diene copolymer, leading to higher processability of the rubber composition. Moreover, this enables production of a cross-linked rubber having further reduced heat buildup and further improved wear resistance.

The molecular weight distribution, which is represented by the ratio (Mw/Mn) of the weight average molecular weight (Mw) to the number average molecular weight (Mn), of the aromatic vinyl-conjugated diene copolymer used in the present invention is preferably 1.1 to 3.5, more preferably 1.2 to 3.0, still more preferably 1.3 to 2.5, particularly preferably 1.3 to 2.0. When the molecular weight distribution (Mw/Mn) of the aromatic vinyl-conjugated diene copolymer is controlled within the above ranges, a cross-linked rubber having further reduced heat buildup and further improved wear resistance can be obtained.

The Mooney viscosity (ML1+4, 100°C) of the aromatic vinyl-conjugated diene copolymer used in the present invention is preferably 20 to 100, more preferably 30 to 90, still more preferably 35 to 80, particularly preferably 40 to 70, most preferably 45 to 65. Note that when the aromatic vinyl-conjugated diene copolymer is obtained as an oil extended rubber, it is preferable that the Mooney viscosity of the oil extended rubber be within the above ranges.

### <Silica>

The rubber composition for heavy-load tires according to the present invention comprises silica in addition to the above-described aromatic vinyl-conjugated diene copolymer having a glass transition temperature (Tg) of -50°C or lower and having a functional group interactive with silica.

Examples of silica which can be used in the present invention include, but are not particularly limited to, dry white carbon, wet white carbon, colloidal silica, precipitated silica, and the like. Alternatively, a carbon-silica dual phase filler comprising silica carried on the surface of carbon black may also be used. Among these, preferred is wet white carbon containing hydrous silicic acid as the main component. These silicas may be used alone or in combination of two or more.

The silica has a nitrogen absorption specific surface area determined by the BET method of preferably 50 to 400 m²/g, more preferably 140 to 250 m²/g, still more preferably 180 to 240 m²/g. When the specific area falls within the above ranges, a cross-linked rubber having further improved chipping resistance and wear resistance and further reduced heat buildup can be obtained. The pH of the silica is preferably less than 7, more preferably 5 to 6.9. Note that nitrogen absorption specific surface area can be measured by the BET method in accordance with ASTM D3037-81.

The amount of the silica present in the rubber composition for heavy-load tires according to the present invention is preferably 10 to 200 parts by weight, more preferably 13 to 150 parts by weight, still more preferably 15 to 100 relative to 100 parts by weight of a rubber component in the rubber composition for heavy-load tires. The use of the silica in an amount within the above ranges ensures good dispersion of the silica in the process of production, and also enables production of a cross-linked rubber having more appropriately reduced heat buildup and more appropriately improved wear resistance and chipping resistance.

### <Carbon black>

The rubber composition for heavy-load tires according to the present invention preferably further comprises carbon black in addition to the aromatic vinyl-conjugated diene copolymer having a glass transition temperature (Tg) of -50°C or lower and having a functional group interactive with silica and the silica. When carbon black is further contained, a cross-linked rubber having further improved wear resistance can be obtained.

Examples of carbon black include furnace black, acetylene black, thermal black, channel black, graphite, and the like. Among these, preferred is furnace black, and specific examples thereof include SAF, ISAF, ISAF-HS, ISAF-LS, IISAF-HS, HAF, HAF-HS, HAF-LS, and the like. These may be used alone or in combination of two or more.

The carbon black has a nitrogen absorption specific surface area determined by the BET method of preferably 30 to 170 m²/g, more preferably 70 to 160 m²/g, still more preferably 110 to 150 m²/g. When the specific surface area falls within the above ranges, a cross-linked rubber having further improved wear resistance can be obtained. Note that nitrogen absorption specific surface area can be measured by the BET method in accordance with JIS K-6217.

The carbon black has a DBP absorption determined by the A method of preferably 60 to 160 cm²/100 g, more preferably 85 to 150 cm²/100 g, still more preferably 110 to 145 cm²/100 g. When the DBP absorption falls within the above ranges, a cross-linked rubber having further improved wear resistance can be obtained. Note that DBP absorption can be measured by the A method in accordance with JIS Z-8091.

The carbon black has an iodide absorption of preferably 25 to 170 mg/g, more preferably 70 to 160 mg/g, still more preferably 110 to 150 mg/g. When the iodide absorption falls within the above ranges, a cross-linked rubber having further improved wear resistance can be obtained. Note that iodide absorption can be measured in accordance with JIS Z-8091.

The amount of the carbon black present in the rubber composition for heavy-load tires according to the present invention is preferably 10 to 200 parts by weight, more preferably 15 to 150 parts by weight, still more preferably 20 to 100 parts by weight, still further more preferably 22 to 40 parts by weight relative to 100 parts by weight of the rubber component in the rubber composition for heavy-load tires. When the carbon black is present in an amount within the above ranges, a cross-linked rubber having more appropriately improved wear resistance can be obtained.

### <Natural rubber>

The rubber composition for heavy-load tires according to the present invention preferably further comprises a natural rubber as a rubber component in addition to the aromatic vinyl-conjugated diene copolymer having a glass transition temperature (Tg) of -50°C or lower and having a functional group interactive with silica. Examples of usable natural rubbers besides normal natural rubber include modified natural rubbers such as epoxidized natural rubbers obtained by introducing an epoxy group, and hydrogenated natural rubbers. These rubbers may be used in combination. When a natural rubber is contained, a cross-linked rubber having further improved chipping resistance can be obtained.

The amount of the natural rubber present in the rubber composition for heavy-load tires according to the present invention is preferably 10 to 80% by weight, more preferably 30 to 70% by weight, still more preferably 40 to 60% by weight, particularly preferably 45 to 55% by weight in 100 parts by weight of the total rubber component in the rubber composition for heavy-load tires according to the present invention. When the natural rubber is present in an amount within the above ranges, a cross-linked rubber having further improved chipping resistance can be obtained.

### <Polybutadiene rubber>

The rubber composition for heavy-load tires according to the present invention preferably further comprises a polybutadiene rubber as a rubber component in addition to the aromatic vinyl-conjugated diene copolymer having a glass transition temperature (Tg) of -50°C or lower and having a functional group interactive with silica. When a polybutadiene rubber is contained, a cross-linked rubber having further reduced heat buildup can be obtained. The polybutadiene rubber may be any of low cis BR (polybutadiene rubber), high cis BR, and high trans BR (trans bond content of butadiene units: 70 to 95%), and these may be used in combination. Further examples of usable polybutadiene rubbers include modified polybutadiene rubbers obtained by introducing a nitrogen atom-containing functional group, a silicon atom-containing functional group, an oxygen atom-containing functional group, or the like.

The amount of the polybutadiene rubber present in the rubber composition for heavy-load tires according to the present invention is preferably 10 to 80% by weight, more preferably 10 to 50% by weight, still more preferably 10 to 30% by weight, particularly preferably 15 to 25% by weight in 100% by weight of the total rubber component in the rubber composition for heavy-load tires according to the present invention. When the polybutadiene rubber is present in an amount within the above ranges, a cross-linked rubber having more appropriately reduced heat buildup can be obtained.

In the case where the rubber composition for heavy-load tires according to the present invention further comprises a natural rubber and/or a polybutadiene rubber, the proportion of the aromatic vinyl-conjugated diene copolymer having a glass transition temperature (Tg) of -50°C or lower and having a functional group interactive with silica is preferably 10 to 80% by weight, more preferably 20 to 60% by weight, still more preferably 20 to 40% by weight, particularly preferably 25 to 35% by weight in 100% by weight of the total rubber component in the rubber composition for heavy-load tires.

### <Other components>

Besides the aromatic vinyl-conjugated diene copolymer having a glass transition temperature (Tg) of -50°C or lower and having a functional group interactive with silica, and the natural rubber and/or the polybutadiene rubber optionally used, the rubber composition for heavy-load tires according to the present invention may further comprise an additional rubber other than the former rubbers as a rubber component. Examples of such rubbers other than the natural rubber and/or the polybutadiene rubber include polyisoprene rubbers, emulsion polymerized styrene-butadiene copolymer rubbers, solution polymerized styrene-butadiene copolymer rubbers, styrene-isoprene copolymer rubbers, butadiene-isoprene copolymer rubbers, styrene-isoprene-butadiene copolymer rubbers, acrylonitrile-butadiene copolymer rubbers, acrylonitrile-styrene-butadiene copolymer rubbers, ring-opened polymers of cyclic olefins, hydrogenated conjugated diene polymers, and the like, but exclude those having a glass transition temperature (Tg) of -50°C or lower and having a functional group interactive with silica. These rubbers may be used alone or in combination of two or more.

In the case where such an additional rubber is used, the content thereof expressed as a proportion in the total rubber component in the rubber composition for heavy-load tires according to the present invention is preferably 50% by weight or less, more preferably 35% by weight or less, still more preferably 20% by weight or less.

To achieve further reduced heat buildup, the rubber composition for heavy-load tires according to the present invention may further comprise a silane coupling agent. The silane coupling agent is not particularly limited, and a variety of silane coupling agents can be used. In the present invention, sulfide-based, mercapto-based, protected mercapto-based (such as those having a carbonylthio group), thiocyanate-based, vinyl-based, amino-based, methacrylate-based, glycidoxy-based, nitro-based, epoxy-based, or chloro-based silane coupling agents can be suitably used. Specific examples of usable silane coupling agents include bis(3-(triethoxysilyl) propyl) disulfide, bis(3-triethoxysilylpropyl)trisulfide, bis(3-(triethoxysilyl)propyl)tetrasulfide, γ-mercaptopropyltriethoxysilane, 3-[ethoxy-bis(3,6,9,12,15-pentaoxaoctacosan-1-yloxy)silyl]-1-propanethiol, 3-octanoylthio-1-propyl-triethoxysilane, 3-trimethoxysilylpropyl-N,N-dimethylthiocarbamoyl tetrasulfide, γ-trimethoxysilylpropylbenzothiazyl tetrasulfide, 3-trimethoxysilylpropylbenzothiazole tetrasulfide, 3-thiocyanate propyltriethoxysilane, vinyltriethoxysilane, N-(β-aminoethyl)-γ-aminopropyltrimethoxysilane, 3-trimethoxysilylpropylmethacrylate monosulfide, γ-glycidoxypropyltriethoxysilane, 3-nitropropyltrimethoxysilane, β-(3,4-epoxycyclohexyl)ethyltrimethoxysilane, 3-chloropropyltrimethoxysilane, and the like. NXT-Z100, NXT-Z30, NXT-Z45, NXT-Z60, NXT-Z45, and NXT available from Momentive Performance Materials Inc., Si69, Si75, and VP Si363 available from Evonik Industries AG, and the like can also be used. These silane coupling agents may be used alone or in combination of two or more. One or more of these silane coupling agents may be preliminarily formed into an oligomer, and may be used in the oligomer form. The amount of the silane coupling agent used is preferably 0.1 to 30 parts by weight, more preferably 1 to 15 parts by weight relative to 100 parts by weight of the silica.

The rubber composition for heavy-load tires according to the present invention preferably further comprises a cross-linking agent. Examples of cross-linking agents include sulfur, halogenated sulfur, organic peroxides, quinone dioximes, organic polyvalent amine compounds, alkylphenol resins having a methylol group, and the like. Among these, sulfur is preferably used. The amount of the cross-linking agent used is preferably 0.1 to 15 parts by weight, more preferably 0.5 to 5 parts by weight, particularly preferably 1 to 4 parts by weight relative to 100 parts by weight of the rubber component in the rubber composition for heavy-load tires.

Furthermore, besides the components above, necessary amounts of compounding agents such as a cross-linking accelerator, a cross-linking activator, an antioxidant, a filler (excluding the silica and carbon black described above), an activating agent, a process oil, a plasticizer, a lubricant, a tackifier, a compatibilizing agent, a surfactant, and the like can be compounded with the rubber composition for heavy-load tires according to the present invention in accordance with ordinary methods.

In the case where sulfur or a sulfur-containing compound is used as a cross-linking agent, use in combination with a cross-linking accelerator and a cross-linking activator is preferred. Examples of cross-linking accelerators include sulfenamide-based cross-linking accelerators; guanidine-based cross-linking accelerators; thiourea-based cross-linking accelerators; thiazole-based cross-linking accelerators; thiuram-based cross-linking accelerators; dithiocarbamic acid-based cross-linking accelerators; xanthic acid-based cross-linking accelerators; and the like. Among these, preferred are those containing sulfenamide-based cross-linking accelerators. These cross-linking accelerators are used alone or in combination of two or more. The amount of the cross-linking accelerator used is preferably 0.1 to 15 parts by weight, more preferably 0.5 to 5 parts by weight, particularly preferably 1 to 4 parts by weight relative to 100 parts by weight of the rubber component in the rubber composition for heavy-load tires.

Examples of cross-linking activators include higher fatty acids such as stearic acid; zinc oxide; and the like. These cross-linking activators are used alone or in combination of two or more. The amount of the cross-linking activator used is preferably 0.05 to 20 parts by weight, particularly preferably 0.5 to 15 parts by weight relative to 100 parts by weight of the rubber component in the rubber composition for heavy-load tires.

Moreover, the rubber composition for heavy-load tires according to the present invention may contain a resin in addition to the rubber component. The use of a resin imparts tackiness to the rubber composition for heavy-load tires, and enhances the dispersibility of the silica in the rubber composition for heavy-load tires. As a result, it is expected that a cross-linked rubber having a greater balance of chipping resistance, low heat buildup, and wear resistance can be obtained. Further, as an effect similar to that of the plasticizer, the processability of the rubber composition for heavy-load tires can also be improved. Examples of resins include a C5 petroleum resin, a C5/C9 petroleum resin, a C9 petroleum resin, a dicyclopentadiene resin, a terpene resin, a terpene phenol resin, an aromatic modified terpene resin, an alkylphenol-acetylene resin, a rosin resin, a rosinester resin, an indene resin, a C9 resin containing indene, a α-methylstyrene-indene copolymer resin, a coumarone-indene resin, a farnesene-based resin, a polylimonene resin, and the like. These resins may be modified, or may be hydrogenated. These resins may be used alone or in combination of two or more. The amount of the resin blended is preferably 25 parts by weight or less with respect to 100 parts by weight of the rubber component in the rubber composition for heavy-load tires.

To obtain the rubber composition for heavy-load tires according to the present invention, the ingredients may be kneaded according to an ordinary method. For example, a target composition can be obtained by kneading the ingredients other than thermally unstable ingredients, such as a cross-linking agent and a cross-linking accelerator, with the aromatic vinyl-conjugated diene copolymer, then mixing thermally unstable ingredients, such as a cross-linking agent and a cross-linking accelerator, with the kneaded material. The kneading temperature of the ingredients other than thermally unstable ingredients and the aromatic vinyl-conjugated diene copolymer is preferably 80 to 200°C, more preferably 120 to 180°C, while the kneading time is preferably 30 seconds to 30 minutes. Further, the kneaded material and the thermally unstable ingredients are mixed after the material is cooled down to typically 100°C or less, preferably 80°C or less.

### <Cross-linked rubber>

The cross-linked rubber according to the present invention can be obtained by cross-linking the rubber composition for heavy-load tires according to the present invention described above.

The rubber composition for heavy-load tires according to the present invention can be cross-linked by any method without limitation, and selection can be made depending on the size, shape, or the like of the cross-linked rubber. The rubber composition for heavy-load tires according to the present invention may be placed in a mold, and then shaped and cross-linked at the same time by heating, or the rubber composition for heavy-load tires according to the present invention may be preliminarily shaped, and then cross-linked by heating. The cross-linking temperature is typically 100 to 200°C, preferably 130 to 190°C, and the cross-linking time is typically 1 minute to 24 hours, preferably 2 minutes to 12 hours, still more preferably 3 minutes to 6 hours.

Depending on the shape, the size, and the like thereof, the inside of the cross-linked rubber may not be sufficiently cross-linked, even when the surface thereof is cross-linked. For this reason, the cross-linked rubber may be further heated for secondary cross-linking.

As a heating method, a common method used to cross-link rubber such as press heating, steam heating, oven heating, or hot air heating can be appropriately selected.

Since the cross-linked rubber according to the present invention is prepared using the rubber composition for heavy-load tires according to the present invention described above, the cross-linked rubber has remarkably reduced heat buildup and excellent wear resistance, and has high chipping resistance. Owing to these properties, the cross-linked rubber according to the present invention can be used in a variety of tires, in particular heavy-load tires mounted on trucks (including tractors and trailers), buses, construction vehicles (e.g., dump trucks and graders), and the like. The cross-linked rubber according to the present invention can be used for parts of such tires including treads, carcasses, sidewalls, and beads, and is particularly suitably used as a tread. Moreover, the cross-linked rubber is also suitably used as a tread of a retreaded tire obtained by replacing a worn or degraded tread.

### EXAMPLES

Hereinafter, the present invention will be described in more details with reference to Examples, but these Examples should not be construed as limitations to the present invention. Hereinafter, "parts" is on a weight basis unless otherwise specified. The tests and the evaluations were performed as follows.

### [Weight average molecular weight, molecular weight distribution, coupling ratio]

Weight average molecular weight (Mw), molecular weight distribution (Mw/Mn), and coupling ratio were determined based on a polystyrene-equivalent molecular weight chart obtained by gel permeation chromatography (GPC). The specific measurement conditions of the gel permeation chromatography were as follows:
Apparatus for measurement: high performance liquid chromatograph (available from Tosoh Corporation, trade name "HLC-8320")
Columns: two columns available from Tosoh Corporation, trade name "GMH-HR-H", which were connected in series.
Detector: differential refractometer
Eluent: tetrahydrofuran
Column temperature: 40°C

The coupling ratio of an aromatic vinyl-conjugated diene copolymer chain was determined based on an elution curve obtained by the gel permeation chromatography under the conditions shown above, where the area ratio of a peak part with a peak top molecular weight at least 1.8 times the peak top molecular weight of a peak with the smallest molecular weight to the total elution area was regarded as a coupling ratio value.

### <Styrene unit content, vinyl bond content>

Styrene unit content and vinyl bond content were determined by ¹H-NMR.

### <Styrene block ratio>

The proportion of styrene blocks as the proportion of aromatic vinyl compound blocks ratio was determined by ¹H-NMR using deuterated chloroform as a solvent with reference to the reference shown below. In the resulting ¹H-NMR spectrum, peaks within 6.1 to 7.7 ppm were regarded as derived from styrene, and peaks within 6.1 to 6.88 ppm among them were regarded as derived from styrene blocks. The ratio of the peak area derived from styrene blocks to the peak area derived from styrene was determined, the value was multiplied by 2.5, and expressed in percentage, and the percentage was regarded as the proportion of styrene blocks.
Reference: Sardelis, K. Michels, H.J. Allen, G. Polymer, 1984, 25, 1011

### <Mooney viscosity (ML(1+4) 100°C)>

Measurement was performed using a Mooney viscometer (available from Shimadzu Corporation) in accordance with JIS K6300-1(2013).

### <Glass transition temperature (Tg)>

Measurement was performed in a helium atmosphere (gas flow rate: 20.0 ml/min) using a differential scanning calorimeter (available from PerkinElmer Co., Ltd., trade name: "DSC8500") in accordance with JIS K6240(2011). The peak top temperature of a differential curve of the resulting DSC curve was determined as the glass transition temperature (Tg) .

### <Heat buildup of cross-linked rubber>

The heat buildup of a cross-linked rubber was evaluated by measuring the tan δ value at 60°C of a test piece having a length of 50 mm, a width of 12.7 mm, and a thickness of 2 mm using ARES-G2 available from TA Instruments at a dynamic strain of 2.5% and 10 Hz. Heat buildup was determined as an index where the measured value of Comparative Example 1 was 100. A greater index indicates lower heat buildup.

### <Wear resistance of cross-linked rubber>

The wear resistance of a cross-linked rubber was evaluated by measuring a test piece having an outer diameter of 50 mm, an inner diameter of 15 mm, and a thickness of 10 mm using an FPS wear testing system (available from Ueshima Seisakusho Co., Ltd.) at a load of 10 N and a slip ratio of 15%. Wear resistance was determined as an index where the measured value of Comparative Example 1 was 100. A greater index indicates better wear resistance.

### <Chipping resistance>

The chipping resistance of a cross-linked rubber was determined by measuring elongation at break by a tensile test using a test piece having a length of 50 mm, a width of 12.7 mm, and a thickness of 2 mm in accordance with JIS K6301. Chipping resistance was determined as an index where the measured value of Comparative Example 1 was 100. A greater index indicates better chipping resistance.

### <Production Example 1>

### (Production of Polymer block (A))

To a nitrogen-purged container were added 218.1 parts of cyclohexane, 7.5 parts of styrene, and 0.3 parts of tetramethylethylenediamine, and the internal temperature of the container was controlled to 50°C. Next, 1.64 parts of n-butyllithium was added, and then 92.5 parts of isoprene was added over 80 minutes, and reacted for 15 minutes to yield a polymer block (A) having an active end. The polymer block (A) had a weight average molecular weight (Mw) of 6,500, a molecular weight distribution (Mw/Mn) of 1.10, a styrene unit content of 7.5%, an isoprene unit content of 92.5%, and a vinyl bond content of 7.0%.

### (Production of terminally modified styrene-butadiene copolymer (P1))

Under a nitrogen atmosphere, 525 parts of cyclohexane, 11.7 parts of styrene, 48.3 parts of 1,3-butadiene, and 0.029 parts of tetramethylethylenediamine were placed into an autoclave with a stirrer, 8.8 parts of a solution containing the polymer block (A) having an active end obtained above (the amount corresponds to 2.6 parts of the polymer block (A) used) was then added, and polymerization was initiated at 50°C. After 10 minutes from the start of polymerization, 3.3 parts of styrene and 33.7 parts of 1,3-butadiene were continuously added over 60 minutes. Thereafter, 3.0 parts of 1,3-butadiene was continuously added over 10 minutes, followed by stirring for 10 minutes. The maximum temperature during the polymerization reaction was 75°C. After it was confirmed that the polymerization conversion ratio reached the range of 95% to 100%, 0.005 parts of 1,6-bis(trichlorosilyl)hexane was added and reacted for 10 minutes. In the next step, 0.15 parts of the polyogranosiloxane represented by Formula (10) shown below in the form of a 40% xylene solution was added and reacted for 10 minutes. Thereafter, 0.15 parts of the polyorganosiloxane represented by Formula (10) shown below in the form of a 40% xylene solution was further added, followed by stirring for 20 minutes. Subsequently, 0.16 parts of 3-(2-aminoethylamino)propyltrimethoxysilane in the form of a 50% xylene solution was added and reacted for 15 minutes. Then, methanol as a polymerization terminator was added in an amount equivalent to two times the moles of n-butyllithium used, affording a polymer solution. To this polymer solution was added 0.25 parts of Irganox 1520L (available from BASF SE) as an antioxidant relative to 100 parts of the copolymer in the polymer solution. Thereafter, the solvent was removed by steam stripping, followed by hot-air drying to yield a terminally modified styrene-butadiene copolymer (P1) as a solid. The terminally modified styrene-butadiene copolymer (P1) thus obtained was measured for weight average molecular weight, coupling ratio, styrene unit content, vinyl bond content, Mooney viscosity, and glass transition temperature. The results are shown in Table 1.

The terminally modified styrene-butadiene copolymer (P1) obtained had a functional group interactive with silica at the polymer end, the functional group having a modifying structure (modifying structure including a Si-OH group, a Si-OCH₃ group, and the like) derived from the polyorganosiloxane represented by Formula (10) shown below and 3-(2-aminoethylamino)propyltrimethoxysilane (the same applies to Production Example 2 described below).

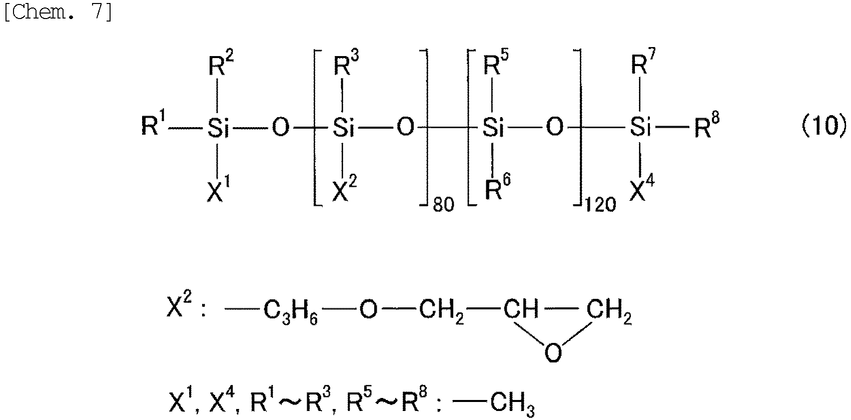

### <Production Example 2>

### (Production of terminally modified styrene-butadiene copolymer (P2))

A terminally modified styrene-butadiene copolymer (P2) was produced in the same manner as in Production Example 1 except that the amounts of styrene and 1,3-butadiene added before the start of polymerization in the production of the terminally modified styrene-butadiene copolymer (P1) of Production Example 1 were changed to 10.0 parts and 50.0 parts, respectively, the amounts of styrene and 1,3-butadiene added after 10 minutes from the start of polymerization were changed to 0.0 parts (namely, styrene was not additionally added) and 37.0 parts, respectively, 0.005 parts of tin tetrachloride was added instead of 0.005 parts of 1,6-bis(trichlorosilyl)hexane, and was reacted for 20 minutes rather than 10 minutes, and 3-aminopropyltrimethoxysilane was used instead of the 50% xylene solution of 3-(2-aminoethylamino)propyltrimethoxysilane.

### <Production Example 3>

### (Production of terminally modified styrene-butadiene copolymer (P3))

Under a nitrogen atmosphere, 500.4 parts of cyclohexane, 15.0 parts of styrene, 37.1 parts of 1,3-butadiene, 0.016 parts of tetramethylethylenediamine were placed into an autoclave with a stirrer, 8.8 parts of a solution containing a polymer block (A) having an active end obtained in the same manner as in Production Example 1 was then added, and polymerization was initiated at 55°C. After 12 minutes from the start of polymerization, 3.3 parts of 1,3-butadiene was continuously added over 4 minutes. One minute later, 17.8 parts of 1,3-butadiene was continuously added over 17 minutes. Furthermore, 13.4 parts of 1,3-butadiene was continuously added over 18 minutes. Additionally, 13.4 parts of 1,3-butadiene was then continuously added over 35 minutes. The maximum temperature during the polymerization reaction was 80°C. The serial addition was followed by stirring for 30 minutes. After it was confirmed that the polymerization conversion ratio reached the range of 95% to 100%, 0.15 parts of the polyorganosiloxane represented by Formula (10) shown above in the form of a 40% xylene solution was added and reacted for 10 minutes. In the next step, 0.15 parts of the polyogranosiloxane represented by Formula (10) shown above in the form of a 40% xylene solution was further added, followed by stirring for 20 minutes. Subsequently, a dilution of 0.16 parts of 3-(2-aminoethylamino)propyltrimethoxysilane in 0.38 parts of cyclohexane was added and reacted for 15 minutes. Then, methanol as a polymerization terminator was added in an amount equivalent to two times the moles of n-butyllithium used, affording a polymer solution. To this polymer solution was added 0.20 parts of Irganox 1520L (available from BASF SE) as an antioxidant relative to 100 parts of the copolymer in the polymer solution. Thereafter, the solvent was removed by steam stripping, followed by hot-air drying to yield a terminally modified styrene-butadiene copolymer (P3) as a solid. The terminally modified styrene-butadiene copolymer (P3) thus obtained was measured for weight average molecular weight, coupling ratio, styrene unit content, vinyl bond content, Mooney viscosity, and glass transition temperature. The results are shown in Table 1.

The terminally modified styrene-butadiene copolymer (P3) obtained had a functional group interactive with silica at the polymer end, the functional group having a modifying structure (modifying structure including a Si-OH group, a Si-OCH₃ group, and the like) derived from the polyorganosiloxane represented by Formula (10) shown above and 3-(2-aminoethylamino)propyltrimethoxysilane (the same applies to Production Examples 4, 5, and 7 described below (the modifier structures in Production Examples 4 and 5 were partially different)).

### <Production Example 4>

### (Production of terminally modified styrene-butadiene copolymer (P4))

A terminally modified styrene-butadiene copolymer (P4) was produced in the same manner as in Production Example 3 except that the amounts of styrene and 1,3-butadiene added before the start of polymerization in Production Example 3 were changed to 10 parts and 42.1 parts, respectively, and N,N-bis(triethylsilyl)aminopropyltrimethoxysilane was used instead of 3-(2-aminoethylamino)propyltrimethoxysilane.

### <Production Example 5>

### (Production of terminally modified styrene-butadiene copolymer (P5))

A terminally modified styrene-butadiene copolymer (P5) was produced in the same manner as in Production Example 3 except that the amount of styrene used in Production Example 3 was changed to 5 parts, and 3-diethylaminopropyltrimethoxysilane was used instead of 3-(2-aminoethylamino)propyltrimethoxysilane.

### <Production Example 6>

### (Production of terminally modified styrene-butadiene copolymer (P6))

Under a nitrogen atmosphere, 498.8 parts of cyclohexane, 5.0 parts of styrene, and 47.1 parts of 1,3-butadiene were placed into an autoclave with a stirrer, 8.8 parts of a solution containing the polymer block (A) having an active end obtained above (the amount corresponds to 2.6 parts of the polymer block (A) used) was then added, and polymerization was initiated at 55°C. After 12 minutes from the start of polymerization, 3.3 parts of 1,3-butadiene was continuously added over 4 minutes. One minute later, 17.8 parts of 1,3-butadiene was continuously added over 17 minutes. Furthermore, 13.4 parts of 1,3-butadiene was continuously added over 18 minutes. Additionally, 13.4 parts of 1,3-butadiene was then continuously added over 35 minutes. The maximum temperature during the polymerization reaction was 80°C. The serial addition was followed by stirring for 30 minutes. After it was confirmed that the polymerization conversion ratio reached the range of 95% to 100%, a dilution of 0.31 parts of the polyorganosiloxane represented by Formula (10) shown above in the form of a 40% xylene solution in 0.12 parts of cyclohexane was continuously added over 28 minutes. After 10 minutes therefrom, a dilution of 0.16 parts of 3-(2-aminoethylamino)propyltrimethoxysilane in 0.38 parts of cyclohexane was added and reacted for 15 minutes. Then, methanol as a polymerization terminator was added in an amount equivalent to two times the moles of n-butyllithium used, affording a polymer solution. To this polymer solution was added 0.20 parts of Irganox 1520L (available from BASF SE) as an antioxidant relative to 100 parts of the copolymer in the polymer solution. Thereafter, the solvent was removed by steam stripping, followed by hot-air drying to yield a terminally modified styrene-butadiene copolymer (P6) as a solid. The terminally modified styrene-butadiene copolymer (P6) thus obtained was measured for weight average molecular weight, coupling ratio, styrene unit content, vinyl bond content, Mooney viscosity, and glass transition temperature. The results are shown in Table 1.

The terminally modified styrene-butadiene copolymer (P6) obtained had a functional group interactive with silica at the polymer end, the functional group having a modifying structure (modifying structure including a Si-OH group, a Si-OCH₃ group, and the like) derived from the polyorganosiloxane represented by Formula (10) shown above and 3-(2-aminoethylamino)propyltrimethoxysilane (the same applies to Production Example 8 described below).

### <Production Example 7>

### (Production of terminally modified styrene-butadiene copolymer (P7))

A terminally modified styrene-butadiene copolymer (P7) was produced in the same manner as in Production Example 3 except that the amount of cyclohexane used in Production Example 3 was changed to 784 parts, and after it was confirmed that the polymerization conversion ratio reached the range of 95% to 100% and before the compound of Formula (10) shown above in the form of a 40% xylene solution was added, 0.0026 parts of 1,6-bis(trichlorosilyl)hexane was added and reacted for 10 minutes. The terminally modified styrene-butadiene copolymer (P7) thus obtained was measured for weight average molecular weight, coupling ratio, styrene unit content, vinyl bond content, Mooney viscosity, and glass transition temperature. The results are shown in Table 1.

### <Production Example 8>

### (Production of terminally modified styrene-butadiene copolymer (P8))

A terminally modified styrene-butadiene copolymer (P9) was produced in the same manner as in Production Example 6 except that the amount of cyclohexane used in Production Example 6 was changed to 645 parts, and after it was confirmed that the polymerization conversion ratio reached the range of 95% to 100% and before the compound of Formula (10) shown above in the form of a 40% xylene solution was added, 0.0026 parts of tin tetrachloride was added and reacted for 20 minutes. The terminally modified styrene-butadiene copolymer (P8) thus obtained was measured for weight average molecular weight, coupling ratio, styrene unit content, vinyl bond content, Mooney viscosity, and glass transition temperature. The results are shown in Table 1.

### <Production Example 9>

### (Production of tin-coupled polybutadiene rubber (P9))

Under a nitrogen atmosphere, 525 parts of cyclohexane and 48.3 parts of 1,3-butadiene were placed into an autoclave with a stirrer, 2.6 parts of n-butyllithium was then added, and polymerization was initiated at 50°C. After 10 minutes from the start of polymerization, 33.7 parts of 1,3-butadiene was continuously added over 60 minutes. Thereafter, 3.0 parts of 1,3-butadiene was continuously added over 10 minutes, followed by stirring for 10 minutes. The maximum temperature during the polymerization reaction was 75°C. After it was confirmed that the polymerization conversion ratio reached the range of 95% to 100%, 0.008 parts of tin tetrachloride was added and reacted for 20 minutes. Then, methanol as a polymerization terminator was added in an amount equivalent to two times the moles of n-butyllithium used, affording a polymer solution. To the polymer solution was added 0.25 parts of Irganox 1520L (available from BASF SE) as an antioxidant relative to 100 parts of the copolymer in the polymer solution. Thereafter, the solvent was removed by steam stripping, followed by hot-air drying to yield a tin-coupled styrene-butadiene rubber (P9) as a solid. The tin-coupled styrene-butadiene rubber (P9) thus obtained was measured for weight average molecular weight, coupling ratio, styrene unit content, vinyl bond content, Mooney viscosity, and glass transition temperature. The results are shown in Table 1.

### <Production Example 10>

### (Production of tin-coupled styrene-butadiene copolymer (P10))

Under a nitrogen atmosphere, 525 parts of cyclohexane, 20.0 parts of styrene, 48.3 parts of 1,3-butadiene, and 0.032 parts of tetramethylethylenediamine were placed into an autoclave with a stirrer, 2.6 parts of n-butyllithium was then added, and polymerization was initiated at 50°C. After 10 minutes from the start of polymerization, 4.0 parts of styrene and 27.7 parts of 1,3-butadiene were continuously added over 30 minutes. This was followed by stirring for 30 minutes. The maximum temperature during the polymerization reaction was 70°C. After it was confirmed that the polymerization conversion ratio reached the range of 95% to 100%, 0.005 parts of tin tetrachloride was added and reacted for 15 minutes. Then, methanol as a polymerization terminator was added in an amount equivalent to two times the moles of n-butyllithium used, affording a polymer solution. To the polymer solution was added 0.25 parts of Irganox 1520L (available from BASF SE) as an antioxidant relative to 100 parts of the copolymer in the polymer solution. Thereafter, the solvent was removed by steam stripping, followed by hot-air drying to yield a terminally modified styrene-butadiene copolymer (P10) as a solid. The tin-coupled styrene-butadiene copolymer (P10) thus obtained was measured for weight average molecular weight, coupling ratio, styrene unit content, vinyl bond content, Mooney viscosity, and glass transition temperature. The results are shown in Table 1.

### [Table 1]

**Table 1**

| | | Production Example 1 | Production Example 2 | Production Example 3 | Production Example 4 | Production Example 5 | Production Example 6 | Production Example 7 | Production Example 8 | Production Example 9 | Production Example 10 |
|---|---|---|---|---|---|---|---|---|---|---|---|
| Terminally modified styrene-butadiene copolymer | | (P1) | (P2) | (P3) | (P4) | (P5) | (P6) | (P7) | (P8) | (P9) | (P10) |
| | Weight average molecular weight | 501,000 | 500,000 | 426,000 | 428,000 | 431,000 | 445,000 | 396,000 | 456,000 | 668,000 | 520,000 |
| | Coupling ratio | 48.6 | 47.6 | 44.1 | 44.1 | 47.6 | 48.9 | 42.2 | 37.8 | 67.2 | 49.5 |
| | Mw/Mn | 1.95 | 1.44 | 1.35 | 1.35 | 1.36 | 1.36 | 1.91 | 1.45 | 1.54 | 1.39 |
| | Styrene unit content [%] | 15.0 | 10.0 | 14.3 | 10.4 | 5.1 | 5.1 | 13.3 | 4.6 | 0.0 | 24.1 |
| | Vinyl bond content [%] | 30.7 | 30.4 | 18.6 | 18.0 | 18.0 | 12.8 | 16.6 | 120 | 13.0 | 33.3 |
| | Proportion of styrene block [%] | 0.4 | 1.2 | 0.8 | 0.7 | 0.5 | 1.9 | 3.4 | 5.6 | 0.0 | 0.1 |
| | Mooney viscosity ML(1+4)100°C | 62.0 | 61.5 | 49.0 | 51.2 | 52.0 | 47.0 | 49.5 | 58.4 | 74.0 | 56.0 |
| | Glass transition temperature [°c] | -59.0 | -65.0 | -70.0 | -75.0 | -80.0 | -85.0 | -71.4 | -86.0 | -92.0 | -48.0 |

In Table 1, the rubber of production Example 9 is the tin-coupled polybutadiene rubber (P9).

### [Example 1]

In a 250-ml Banbury mixer, 50 parts of natural rubber, 30 parts of the terminally modified styrene-butadiene copolymer (P1) obtained in Production Example 1, 20 parts of butadiene rubber (available from Zeon Corp., trade name "Nipol BR1220") were masticated for 30 seconds. Next, 25 parts of silica (available from Solvay S. A., trade name "Zeosil 1165MP"), 25 parts of carbon black (available from Tokai Carbon Co., Ltd., trade name "Seast 9H"), and 2.0 parts of a silane coupling agent: bis(3-(triethoxysilyl)propyl)tetrasulfide (available from Evonik Industries AG, trade name "Si69") were added, followed by kneading for 1.5 minutes in which the starting temperature was 110°C. Subsequently, 3 parts of zinc oxide, 2 parts of stearic acid, and 2 parts of an antioxidant: N-phenyl-N'-(1,3-dimethylbutyl)-p-phenylene diamine (available from Ouchi Shinko Chemical Industrial Co., Ltd., trade name: "NOCRAC 6C") were added, followed by kneading for another 2.5 minutes. The kneaded product was discharged from the mixer. The temperature of the kneaded product at the end of kneading was 150°C. The kneaded product was cooled to room temperature, followed by kneading for 3 minutes in the Banbury mixer in which the starting temperature was 110°C. Thereafter, the kneaded product was discharged from the mixer. In the next step, the kneaded product was combined with 1.75 parts of sulfur and a mixture of 1.0 part of a cross-linking accelerator: N-(tert-butyl)-2-benzothiazolesulfenamide (available from SANSHIN CHEMICAL INDUSTRY CO., LTD., trade name "SANCELER NS-G") and 0.53 parts of a cross-linking accelerator: 1 3-diphenylguanidine (available from Ouchi Shinko Chemical Industrial Co., Ltd., trade name: "Noccelar D"), and kneaded on an open roll mill at 50°C. Then, a sheet-shaped rubber composition was taken out. The rubber composition thus obtained was press-cross-linked at 160°C for 7 minutes to prepare a cross-linked rubber test piece, which was evaluated for heat buildup, wear resistance, and chipping resistance. The results are shown in Table 2.

### <Examples 2 to 6>

Rubber compositions were obtained in the same manner as in Example 1 except that 30 parts of the terminally modified styrene-butadiene copolymer (P1) obtained in Production Example 1 was replaced by the terminally modified styrene-butadiene copolymers (P2) to (P6) obtained in Production Examples 2 to 6 each in an amount of 30 parts. Cross-linked rubber test pieces were likewise prepared and evaluated. The results are shown in Table 2.

### <Example 7>

A rubber composition was obtained in the same manner as in Example 6 except that silica available from Evonik Industries AG under the trade name of "Ultrasil 9100GR" and carbon black available from Tokai Carbon Co., Ltd. under the trade name of "Seast 7HM" were used. A cross-linked rubber test piece was likewise prepared and evaluated. The results are shown in Table 2.

### <Example 8>

A rubber composition was obtained in the same manner as in Example 1 except that 30 parts of the terminally modified styrene-butadiene copolymer (P7) obtained in Production Example 7 was used instead of 30 parts of the terminally modified styrene-butadiene copolymer (P1) obtained in Production Example 1. A cross-linked rubber test piece was likewise prepared and evaluated. The results are shown in Table 2.

### <Example 9>

A rubber composition was obtained in the same manner as in Example 1 except that 30 parts of the terminally modified styrene-butadiene copolymer (P8) obtained in Production Example 8 was used instead of 30 parts of the terminally modified styrene-butadiene copolymer (P1) obtained in Production Example 1. A cross-linked rubber test piece was likewise prepared and evaluated. The results are shown in Table 2.

### <Comparative Example 1>

A rubber composition was obtained in the same manner as in Example 1 except that 30 parts of the tin-coupled polybutadiene rubber (P9) obtained in Production Example 9 was used instead of 30 parts of the terminally modified styrene-butadiene copolymer (P1) obtained in Production Example 1. A cross-linked rubber test piece was likewise prepared and evaluated. The results are shown in Table 2.

### <Comparative Example 2>

A rubber composition was obtained in the same manner as in Example 1 except that 30 parts of the tin-coupled styrene-butadiene copolymer (P10) obtained in Production Example 10 was used instead of 30 parts of the terminally modified styrene-butadiene copolymer (P1) obtained in Production Example 1. A cross-linked rubber test piece was likewise prepared and evaluated. The results are shown in Table 2.

### [Table 2]

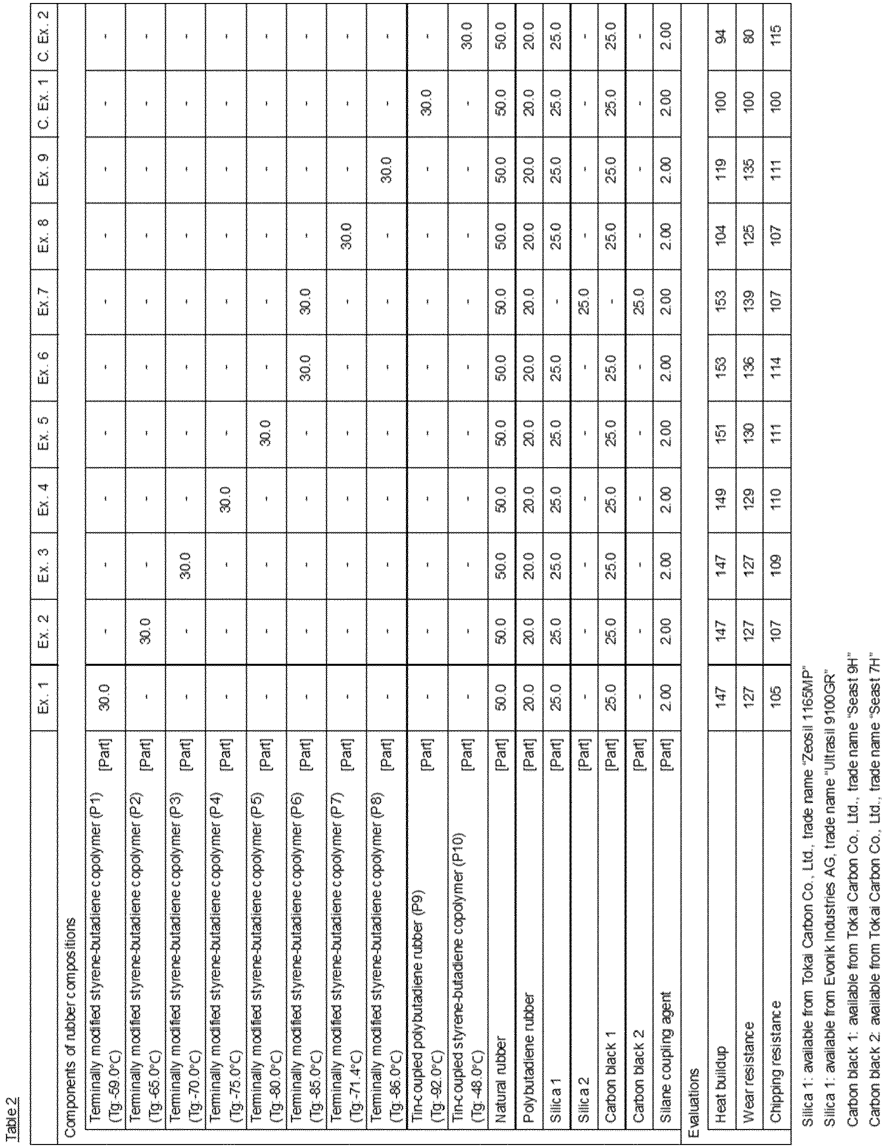

As seen in Tables 1 and 2, the cross-linked rubbers prepared using rubber compositions containing an aromatic vinyl-conjugated diene copolymer having a glass transition temperature (Tg) of -50°C or lower and having a functional group interactive with silica and silica had remarkably reduced heat buildup and excellent wear resistance and had high chipping resistance (Examples 1 to 9).

On the other hand, the cross-linked rubber prepared using a polybutadiene rubber having no functional group interactive with silica had insufficiently low heat buildup and insufficient wear resistance and chipping resistance although the glass transition temperature (Tg) of the polybutadiene rubber was -50°C or lower (Comparative Example 1).

Moreover, the cross-linked rubber prepared using an aromatic vinyl-conjugated diene copolymer having a glass transition temperature (Tg) of higher than -50°C and having no functional group interactive with silica had insufficiently low heat buildup and insufficient wear resistance and chipping resistance (Comparative Example 2).

## Claims

1. A rubber composition for heavy-load tires, comprising:
an aromatic vinyl-conjugated diene copolymer having a glass transition temperature (Tg) of -50°C or lower and having a functional group interactive with silica; and
silica.

2. The rubber composition for heavy-load tires according to claim 1, wherein the glass transition temperature (Tg) of the aromatic vinyl-conjugated diene copolymer is -70°C or lower.

3. The rubber composition for heavy-load tires according to claim 1 or 2, wherein the silica has a nitrogen absorption specific surface area determined by the BET method of 30 to 500 m²/g.

4. The rubber composition for heavy-load tires according to any one of claims 1 to 3, wherein the amount of the silica present is 10 to 200 parts by weight relative to 100 parts by weight of a rubber component including the aromatic vinyl-conjugated diene copolymer.

5. The rubber composition for heavy-load tires according to any one of claims 1 to 4, further comprising carbon black.

6. The rubber composition for heavy-load tires according to claim 5, wherein the carbon black has a nitrogen absorption specific surface area determined by the BET method of 30 m²/g or more.

7. The rubber composition for heavy-load tires according to claim 5 or 6, wherein the amount of the carbon black present is 10 to 200 parts by weight relative to 100 parts by weight of a rubber component including the aromatic vinyl-conjugated diene copolymer.

8. The rubber composition for heavy-load tires according to any one of claims 1 to 7, wherein the amount of the aromatic vinyl-conjugated diene copolymer present is 10 to 80% by weight in 100% by weight of the total rubber component.

9. The rubber composition for heavy-load tires according to any one of claims 1 to 8, further comprising a natural rubber, the natural rubber being present in an amount of 10 to 80% by weight in 100% by weight of the total rubber component.

10. The rubber composition for heavy-load tires according to any one of claims 1 to 9, further comprising a polybutadiene rubber, the polybutadiene rubber being present in an amount of 10 to 80% by weight in 100% by weight of the total rubber component.

11. The rubber composition for heavy-load tires according to any one of claims 1 to 10, wherein the functional group interactive with silica of the aromatic vinyl-conjugated diene copolymer is a group having a structure represented by Si-OR^{a}, wherein R^{a} is a hydrogen atom or a hydrocarbyl group optionally having a substituent.

12. A cross-linked rubber obtained by cross-linking the rubber composition for heavy-load tires according to any one of claims 1 to 12.

13. A heavy-load tire comprising the cross-linked rubber according to claim 12.
